# EUROPÄISCHE PATENTSCHRIFT

(11) **EP 3 161 472 B1**
(45) Veröffentlichungstag und Bekanntmachung des Hinweises auf die Patenterteilung: **09.08.2023**
(21) Anmeldenummer: 15722134.2
(22) Anmeldetag: 04.05.2015
(51) Int. Cl.: G01N 27/87

(54) **VERFAHREN UND VORRICHTUNG ZUR STREUFLUSSPRÜFUNG**
METHOD AND DEVICE FOR STRAY FLOW TESTING
PROCÉDÉ ET DISPOSITIF DE TEST DE FLUX DE FUITE

(30) Priorität: 27.06.2014 DE 102014212499
(43) Veröffentlichungstag der Anmeldung: 03.05.2017
(73) Patentinhaber: Institut Dr. Foerster GmbH & Co. KG, 72766 Reutlingen (DE)
(72) Erfinder: UHLIG, Robert P., 72574 Bad Urach (DE); HECKER, Friedrich, 72770 Reutlingen (DE)
(74) Vertreter: Patentanwälte Ruff, Wilhelm, Beier, Dauster & Partner mbB
(86) Internationale Anmeldenummer: PCT/EP2015/059657
(87) Internationale Veröffentlichungsnummer: WO 2015/197239

(56) Entgegenhaltungen:
- EP-A1- 0 073 017
- EP-A2- 2 594 929
- WO-A1-93/16380
- US-A- 5 943 632
- US-A1- 2004 100 256
- US-A1- 2012 109 565
- US-B1- 6 549 005
- US-B1- 6 633 159

## Beschreibung

### ANWENDUNGSGEBIET UND STAND DER TECHNIK

Die Erfindung bezieht sich auf ein Verfahren zur Streuflussprüfung von ferromagnetischem Prüfgut zum Nachweis von Defekten sowie auf eine zur Durchführung des Verfahrens geeignete Vorrichtung.

Magnetische Streuflussverfahren sind bei der zerstörungsfreien Prüfung von Halbzeug und Fertigteilen auf Defekte eine wichtige Komponente zur Qualitätsüberwachung sowohl im Herstellungsprozess als auch bei der zyklisch wiederkehrenden Prüfung der Fertigteile. Magnetische Streuflussverfahren sind gegenüber einigen störenden Eigenschaften der Werkstoffe, wie beispielsweise Rauhigkeit der Oberfläche oder Zunderbelag bei warmgewalzten Produkten, weniger empfindlich als beispielsweise das Wirbelstromverfahren oder die Ultraschallprüfung. Dadurch ergibt sich ein besseres Verhältnis zwischen Nutzsignal und Störsignal (N/S-Verhältnis), wodurch eine zuverlässigere Fehlererkennung ermöglicht wird.

Bei einer Vorrichtung zum Detektieren von Defekten mittels Streuflussmessung wird ein Prüfvolumen des Prüflings mittels einer Magnetisierungseinrichtung magnetisiert und mit Hilfe mindestens einer magnetfeldempfindlichen Sonde (Streuflusssonde) zur Erfassung von durch die Defekte verursachten magnetischen Streufeldern abgetastet. Dabei findet eine Relativbewegung zwischen der Sonde und der Oberfläche des Prüfguts in einer Abtastrichtung statt. Bei der Abtastung wird die Sonde in einem relativ kleinen, aber endlichen Prüfabstand zur Oberfläche des Prüfguts gehalten. Eine einzelne Sonde überstreicht eine Prüfspur, deren Breite durch die wirksame Breite der Sonde quer zur Abtastrichtung bestimmt wird.

Der von einer Magnetisierungseinrichtung im Prüfgut erzeugte magnetische Fluss bzw. das Magnetfeld verteilt sich im defektfreien Material räumlich im Wesentlichen homogen. In diesem Fall treten in den oberflächennahen Bereichen auch keine wesentlichen Magnetfeldgradienten auf. Risse und andere Defekte, wie z.B. Lunker, Einschlüsse, oder sonstige Inhomogenitäten wie z.B. Schweißnähte etc., wirken als Bereiche erhöhten magnetischen Widerstandes, so dass Feldanteile in der Nähe eines Defektes um den Defekt herumgeleitet und aus dem Metall in den oberflächennahen Bereich heraus gedrängt werden. Die heraus gedrängten Feldanteile werden bei den Streuflussverfahren zum Nachweis der Defekte detektiert. Bei einer Streuflussmessung ist ein Defekt dann detektierbar, wenn die aus dem Prüfling verdrängten Feldanteile bis zum Bereich der Sonde reichen und dort eine für die Detektion ausreichende Änderung des Feldes hervorrufen.

Die Streufluss-Prüfverfahren bzw. Prüfvorrichtungen werden abhängig davon, wie das zu prüfende Material magnetisiert wird, in Verfahren bzw. Vorrichtungen mit Gleichfeldmagnetisierung (DC-Streuflussprüfung) und Verfahren bzw. Vorrichtungen mit Wechselfeldmagnetisierung (AC-Streuflussprüfung) unterteilt.

Bei der Prüfung von Rohren strebt man an, sowohl Außenfehler, d.h. Fehler bzw. Defekte an der Außenseite des Rohres, als auch Innenfehler, d.h. Fehler an der Rohrinnenseite sowie Fehler in der Rohrwand zu erfassen. Dazu werden normalerweise Verfahren mit Gleichfeldmagnetisierung (DC-Streuflussprüfung) eingesetzt. Dabei wird ein wesentlicher Vorteil der Gleichfeldmagnetisierung genutzt, nämlich die große Eindringtiefe, so dass auch Innenfehler und Fehler in der Rohrwand erfasst werden können.

Bei den hier betrachteten Verfahren und Vorrichtungen wird zur Durchführung der Prüfung eine Sondenanordnung verwendet, die ein Sonden-Array mit einer Vielzahl von magnetfeldempfindlichen Sonden aufweist, welche in einer ersten Richtung (Breitenrichtung) nebeneinander angeordnet sind. Die elektrischen Sondensignale, d.h. die elektrischen Signale der Sonden, oder daraus abgeleitete Signale, werden mittels einer Auswerteeinrichtung zur Qualifizierung der Defekte gemeinsam ausgewertet. Durch Verwendung eines Sonden-Arrays kann die bei einem Abtastvorgang abgedeckte Prüfbreite wesentlich größer sein als die von einer Einzelsonde abgedeckte Prüfbreite. Die Ortsauflösung in Breitenrichtung wird weiter durch die Sondenbreite der einzelnen Sonden bestimmt. Durch Verwendung von Sonden-Arrays ist eine effiziente Prüfung von Prüflingen im Durchlaufverfahren möglich.

Bei der Dimensionierung der einzelnen Sonden bezüglich ihrer Sondenbreite orientiert man sich üblicher Weise an der so genannten Mindestfehlerlänge. Die Mindestfehlerlänge ist diejenige Fehlerlänge (bzw. Defektlänge), ab der die maximale Amplitude des Sondensignals, d.h. höchste Prüfempfindlichkeit, sowie die maximale Reproduzierbarkeit erreicht wird. In einschlägigen Normen werden Sondenbreiten von 30 mm, bzw. einer oder einer halben Mindestfehlerlänge genannt, wobei die Mindestfehlerlänge je nach Norm z.B. 25 mm oder 50 mm betragen kann. Durch den Bezug zur Mindestfehlerlänge kann ein guter Kompromiss zwischen einer möglichst kleinen Anzahl von Sonden bei möglichst langem bzw. breitem Sonden-Array (Kostenoptimierung) und der für eine gute Reproduzierbarkeit der Defekterkennung als erforderlich angesehene maximal zulässigen Sondenbreite (i.d.R. die Hälfte der Mindestfehlerlänge) erzielt werden.

Das Dokument WO 93/16380 A1 offenbart ein gattungsgemäßes Verfahren und eine gattungsgemäße Vorrichtung zur Streuflussprüfung von ferromagnetischem Prüfgut mittels Sonden-Arrays. Bei einem Beispiel wird für den Abstand zwischen den Zentren benachbarter Sonden des Sonden-Arrays ein Wert von 7,5 mm angegeben.

Das Patent US 6,633,159 B1 befasst sich mit Verfahren und Vorrichtungen zur Streuflussmessung zur Ermittlung von Degradationen an Aufzugseilen unter Verwendung von Sonden-Arrays.

Die veröffentlichte Patentanmeldung US 2012/0109565 A beschreibt Verfahren und Vorrichtungen zur magnetischen Streuflussmessung, die es ermöglichen sollen, die auf Defekte zurückgehenden Signale unbeeinflusst durch Änderung der Messbedingungen ermitteln zu können.

Die Dokumente US 2004/0100256 A1, EP 0 073 017 A1 und EP 2 594 929 A2 offenbaren Verfahren zur Streuflussprüfung von ferromagnetischen Prüfgütern mithilfe von Sonden-Arrays.

Die Patentschrift US 6,549,005 B1 offenbart Verfahren und Einrichtungen zur Detektion von Diskontinuitäten in Schienen unter Verwendung von Halleffekt-Sensoren. Bei einer Verfahrensvariante werden die Signale von zehn in einer Reihe nebeneinander angeordneten Halleffekt-Sensoren miteinander verrechnet, wobei die Signale von Halleffekt-Sensoren, die den Mittelbereich der Schiene abtasten, stärker gewichtet werden. Dadurch sollen Materialermüdungseffekte zuverlässiger erfassbar sein als bei einfacher Addition der Signale ohne die Gewichtung.

### AUFGABE UND LÖSUNG

Es ist eine Aufgabe der Erfindung, ein Verfahren und eine Vorrichtung zur Streuflussprüfung von ferromagnetischem Prüfgut mittels Sonden-Arrays anzugeben, die eine zuverlässige Prüfung auf Fehler unterschiedlichen Fehlertyps ermöglichen.

Zur Lösung dieser Aufgabe stellt die Erfindung ein Verfahren mit den Merkmalen von Anspruch 1 sowie eine Vorrichtung mit den Merkmalen von Anspruch 15 bereit. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Bei Verfahren und Vorrichtungen gemäß der beanspruchten Erfindung wird die Sondenbreite der einzelnen Sonden eines Sonden-Arrays gegenüber herkömmlichen Ansätzen wesentlich verringert. Die Sondenbreite orientiert sich nicht mehr an der Mindestfehlerlänge, sondern an der kleinsten zu erwarteten Streuflussbreite; diese wird wesentlich vom Abstand der Sonde zu der Materialoberfläche (Prüfabstand) bestimmt. Es wird ein in Breitenrichtung örtlich hochauflösendes Sonden-Array bereitgestellt. Als eine technisch sinnvolle untere Grenze für die Sondenbreite wird etwa ein Fünftel des Prüfabstands angesehen. Bei heutzutage typischen Prüfabständen im Bereich einiger Zehntel Millimeter bis ca. 2 mm wird derzeit eine untere Grenze der Sondenbreite von 0.1 mm als sinnvoll angesehen, so dass - gemäß einer alternativen Formulierung, die Sondenbreite im Bereich von 0.1 mm bis 10 mm liegen sollte. Bei Sondenbreiten der einzelnen Sonden von mehr als 10 mm kann die angestrebte hohe Ortsauflösung der einzelnen Sonden in der Regel nicht mehr voll erreicht werden. Besonders vorteilhaft erscheinen zurzeit Sondenbreiten im Bereich von 0.5 mm bis 3 mm.

Die Auswertung der Sondensignale umfasst mehrere aufeinander abgestimmte Operationen, die besonders an die örtlich bzw. räumlich hochauflösende Sondenanordnung angepasst sind.

In einer Mapping-Operation wird für jedes Sondensignal eine das Sondensignal repräsentierende Signalinformation mit einer Ortsinformation verknüpft, die den Entstehungsort des Sondensignals in einem abgetasteten Flächenbereich repräsentiert. Dadurch werden ortsabhängige Signal-Daten gebildet. Die Mapping-Operation schafft eine eindeutige Zuordnung zwischen Signalinformation und Ortsinformation und kann als Basis zur Generierung einer "Landkarte" des jeweils abgetasteten Flächenbereichs dienen. Für die Ermittlung der Ortsinformation können z.B. Signale von Drehgebern (Winkellagegebern) und/oder Weggebern der Prüfvorrichtung genutzt werden.

In einer Matrixbildungs-Operation werden die ortsabhängigen Signal-Daten (oder daraus abgeleitete Signal-Daten) in ortsrichtig zugeordneten Feldern bzw. Elementen einer Basis-Matrix gespeichert. Der Begriff "Matrix" bezeichnet hierbei abweichend von einer üblichen Definition einer Matrix in der Mathematik (zweidimensionale rechteckige Anordnung von Elementen in Zeilen und Spalten) eine n-dimensionale Anordnung von Elementen, wobei n größer oder gleich zwei ist. Eine Matrix im Sinne der Anmeldung kann somit mehr als zwei Dimensionen haben, beispielsweise drei oder vier. Die Matrix schafft im weitesten Sinne eine Zuordnung zwischen Ortsinformation, Signalinformation und ggf. weiterer Information zu Parametern, die das Verfahren und dessen Ergebnisse beeinflussen.

Eine erste Dimension der Basis-Matrix repräsentiert die Signalinformation, die Information über den an einem bestimmten Ort der Prüfgutoberfläche gemessenen Streufluss enthält. Diese Signalinformation kann als skalare Größe oder als vektorielle Größe gegeben sein. Als skalare Größe kommt z.B. die Signalamplitude oder eine ausgewählte Komponente des Streuflusses in Betracht, die z.B. die Normalkomponente oder eine Tangentialkomponente des gemessenen Streuflusses repräsentieren kann. Die Signalinformation kann auch den kompletten Vektor des Streuflusses (Bx-, By und Bz-Komponente) repräsentieren.

Eine zweite Dimension der Basis-Matrix repräsentiert eine Position in der ersten Richtung, also in Breitenrichtung des Sonden-Arrays (quer zur Abtastrichtung). Wenn jeder Sonde des Sonden-Arrays ein eigener Kanal zugeordnet wird, kann die Position in der ersten Richtung auch durch die Kanalnummer gegeben sein.

Eine dritte Dimension der Basis-Matrix repräsentiert eine Position in Abtastrichtung. Diese Richtung kann senkrecht zur ersten Richtung liegen oder in einem mehr oder weniger spitzen Winkel dazu ausgerichtet sein.

Auch weitere Dimensionen sind möglich. Denkbar wäre z.B. die Bildung einer mehrdimensionalen Anordnung von Elementen bzw. Feldern, in welcher die magnetische Flussdichte als Vektor in Abhängigkeit von Sonde, Ort in Durchlaufrichtung und Lift-Off (Prüfabstand) abgespeichert wird. Die Matrix bildet dann eine Spezialform eines Tensors für Arrays, in denen die Sonden wie beschrieben angeordnet sind.

Die Basis-Matrix bzw. die in den einzelnen Elementen bzw. Feldern enthaltene Feldinformation dient als Basis für die weiteren Operationen der Auswertung. Dabei wird mindestens eine Auswertungs-Operation ausgeführt, in welcher ortsabhängige Signal-Daten aus mindestens zwei in einer (virtuellen) Auswertungsrichtung unmittelbar oder mittelbar benachbarten Feldern der Basis-Matrix unter Verwendung mindestens eines Auswertungsalgorithmus miteinander verknüpft werden.

Diese Auswertung arbeitet somit mit der "Landkarte" des in der Basis-Matrix repräsentierten Flächenbereichs, um die in der Basis-Matrix bzw. ihren Feldern oder Elementen enthaltene Information nach einem oder mehreren Kriterien auszuwerten. Dabei wird die Sondeninformation einer der einzelnen Sonden des Sonden-Arrays gemeinsam mit der Sondeninformation mindestens einer weiteren, in der Auswertungsrichtung benachbarten Sonde des Sonden-Arrays und/oder einer benachbarten Prüfspur ausgewertet. Dabei kann berücksichtigt werden, dass sich die Verhältnisse zwischen zwei eng benachbarten Orten am Prüfgut, die von eng benachbarten Sonden abgetastet werden, in der Regel nicht sprunghaft ändern, so dass eine gegenseitige Abhängigkeit der Sondensignale berücksichtigt werden kann.

Diese Auswertung kann innerhalb der Sonden desselben Sonden-Arrays erfolgen. Wenn mehrere Sonden-Arrays vorgesehen sind, deren Sonden die gleichen oder zueinander benachbarte Prüfspuren abtasten, kann die Auswertung auch Sonden-Array-übergreifend arbeiten, so dass die Signale von Sonden unterschiedlicher Sonden-Arrays mit ortsrichtiger Zuordnung gemeinsam ausgewertet werden.

Die Sondenbreite der einzelnen Sonden ist wesentlich kleiner als ein halbe Mindestfehlerlänge, also deutlich kleiner als bisher üblich. Dadurch wird eine Prüfung mit höherer Ortsauflösung zumindest in der ersten Richtung möglich. Dennoch können Normdefekte, welche durch die Mindestfehlerlänge repräsentiert werden, mindestens genauso gut wie bisher gefunden werden, da durch die gemeinsame Auswertung der Sondensignale benachbarter Sonden und/oder Prüfspuren bei Bedarf auch eine an die Mindestfehlerlänge angepasste breitere effektive Sondenbreite geschaffen bzw. simuliert werden kann. Darüber hinaus können aber auch weitere Defekte, für die konventionelle Prüfverfahren und -vorrichtungen "blind" oder "sehschwach" (d.h. wenig empfindlich) waren, zuverlässig gefunden und identifiziert werden.

Vorzugsweise wird bei der Bildung der Basis-Matrix bipolare Signalinformation verwendet, also "rohe" Signalinformation aus nicht gleichgerichteten Sondensignalen. Dadurch können für die Auswertung auch Informationen genutzt werden, die durch Gleichrichtung verloren gehen würden.

Alle Sonden eines Sonden-Arrays können in einer einzigen geraden Reihe in der ersten Richtung (Breitenrichtung) nebeneinander angeordnet sein. Wegen des endlichen Prüfabstands können sich die wirksamen Breiten benachbarter Sonden überlappen. Es ist auch möglich, die Sonden in zwei (oder mehr) zueinander parallele Reihen aufzuteilen und in Breitenrichtungen so gegeneinander versetzt anzuordnen, dass die Sonden "auf Lücke" sitzen. Dadurch ist eine in Breitenrichtung lückenlose Abdeckung der gesamten Prüfbreite möglich.

Als Sonden kommen insbesondere Hall-Sonden oder MR-Sonden (Sonden, die einen magnetoresistiven Effekt zur Magnetfelddetektion ausnutzen, z.B. GMR (giant magnetoresistance), AMR (anisotropic magnetoresistance, CMR (colossal magnetoresistance) oder TMR (tunnel magnetoresistance)) oder induktive Sonden (insbesondere Spulen) oder jede andere Art von magnetfeldempfindlichen Sonden in Betracht.

Um bei der nachfolgenden Signalverarbeitung möglichst nur solche Signale zu verarbeiten, die tatsächlich für die Prüfsituation Relevanz haben können, ist bei manchen Varianten des Verfahrens in der Vorrichtung eine der Mapping-Operation vorgeschaltete Vorfilterung der Sondensignale mittels eines Bandpassfilters mit einstellbaren Grenzfrequenzen vorgesehen. Dabei wird eine untere Grenzfrequenz auf eine kleinste und eine obere Grenzfrequenz auf eine größte zu erwartende Frequenz der Sondensignale eingestellt. Hierdurch ist eine grobe Vorfilterung möglich. Die Grenzfrequenzen können in Abhängigkeit von der Sonden-Überlaufgeschwindigkeit, dem Prüfabstand, der kleinsten und größten zu detektierenden Fehlerbreite und Fehlertiefe, gegebenenfalls der Wanddicke (bei Rohren) und eventuell anderer Randbedingungen eingestellt werden. Dadurch kann die Prüfung auf spezifische Prüfbedingungen abgestimmt werden, einige Störer werden aus den Signalen entfernt und die Relevanz der weiterverarbeiteten Signale erhöht sich. Durch geeignete Vorwahl einer unteren Grenzfrequenz können beispielsweise niederfrequente Signalanteile beseitigt werden, die bei der Prüfsituation keine für das Prüfgut relevante Information tragen. Die höchste Grenzfrequenz kann beispielsweise so eingestellt werden, dass Frequenzen ausgefiltert werden, die größer sind als solche Frequenzen, die typischerweise von kleinen Rissen an der Oberfläche des Prüfgutes stammen. Diese ergeben erfahrungsgemäß die höchsten relevanten Frequenzanteile.

Die Auswertung der Signale kann bei manchen Ausführungsformen spezifisch auf unterschiedliche Fehlertypen optimiert werden. Bei manchen Ausführungsformen ist eine der Mapping-Operation nachgeschaltete, vom Fehlertyp abhängige Filterung mittels eines oder mehrerer Bandpassfilter mit einstellbaren Grenzfrequenzen vorgesehen, wobei eine untere Grenzfrequenz eines Bandpassfilters auf eine kleinste und eine obere Grenzfrequenz des Bandpassfilters auf eine größte zu erwartende Frequenz der Sondensignale für einen vorbestimmten Fehlertyp eingestellt wird. Es wird somit eine Fehlertyp-abhängige Bandpassfilterung vorgenommen. Jede dieser Filterungen eröffnet einen spezifischen Fehlertyp-Pfad, wobei die nachfolgenden Auswerteschritte innerhalb eines Fehlertyp-Pfades spezifisch für den jeweiligen Fehlertyp sind. In einem Speicher der Vorrichtung können Fehlertyp-Daten gespeichert sein, durch die ein Fehlerkatalog zu den Fehlertypen zur Verfügung gestellt wird. Ein Fehlertyp-Katalog kann z.B. folgende Fehlertypen beinhalten: Außenfehler, Innenfehler (beispielsweise bei Rohren), Bohrungen unterschiedlicher Durchmesser, Schalenfehler, Schrägfehler unterschiedlicher Orientierung quer zur ersten und zur zweiten Richtung, Überwalzungen, Lunker, Gießpulvereinschlüsse etc.

Eine besonders hohe Bedienerfreundlichkeit und hohe Spezifität bei der Detektion von Fehlern ist bei manchen Ausführungsformen dadurch gegeben, dass die Anzahl von Bandpässen für die vom Fehlertyp-abhängige Filterung konfigurierbar ist, so dass die Vorrichtung bzw. das Verfahren auf eine bestimmte Prüfsituation optimal abgestimmt werden kann. Vorzugsweise werden für die vom Fehlertyp abhängige Filterung drei, vier, fünf, sechs oder mehr Bandpassfilter mit unterschiedlichen Grenzfrequenzen verwendet. Die Unterscheidungsfähigkeit wird dadurch gegenüber herkömmlichen Verfahren und Vorrichtungen wesentlich erhöht, welche im Wesentlichen bei der Rohrprüfung nur zwischen Innenfehlern (ergeben niedrigere Frequenzen) und Außenfehlern (ergeben höhere Frequenzen) unterscheiden konnten.

Die Eröffnung unterschiedlicher Fehlerpfad-Typen für die Auswertung kann auch in anderen Phasen des Auswerteprozesses erfolgen, insbesondere basierend auf ortsabhängigen Signaldaten, die in den Feldern der Basis-Matrix gespeichert sind.

Wie erwähnt dienen die Basis-Matrix bzw. die in den einzelnen Feldern der Basis-Matrix enthaltene Feldinformation als Basis für weitere Operationen der Auswertung.

Vorzugsweise werden eine oder mehrere Auswertungsoperationen durchgeführt, die als Filterungs-Operationen von ortsabhängigen Signaldaten über eine vorgegebene Anzahl von zueinander benachbarten Feldern in einer vorgegebenen Auswertungsrichtung ausgelegt sind. Der Begriff "Filterungs-Operation" soll hierbei insbesondere solche Operationen umfassen, mit deren Hilfe aus einem Signal bestimmte Bestandteile oder Merkmale entfernt werden können, beispielsweise bestimmte Frequenzanteile oder Rauschen. Dabei ist es prinzipiell möglich, mit beliebigen, aber hinsichtlich ihrer Grenzfrequenzen (eine oder mehrere) für die Fehlerdetektion besonders geeigneten Filtern in prinzipiell beliebige Auswerterichtungen der Basis-Matrix Auswertungs-Operationen durchzuführen. Zu den Filterungs-Operationen gehören insbesondere Operationen mit Tiefpasscharakteristik (Tiefpassfilterung), Operationen mit Hochpasscharakteristik (Hochpassfilterung) und Operationen mit Bandpass-Charakteristik (Bandpassfilterung), wobei die Bandpassfilterung prinzipiell als Kombination einer Hochpassfilterung und einer Tiefpassfilterung mit bestimmten Grenzfrequenzen angesehen werden kann.

Bei manchen Ausführungsformen ist vorgesehen, dass eine Auswertungs-Operation eine Glättungsoperation von ortsabhängigen Signaldaten über eine vorgegebene Anzahl von zueinander benachbarten Feldern in einer Auswerterichtung (Glättungsrichtung) umfasst. Für jeden Feldinhalt ist dabei eine Glättung zu jedem seiner Nachbarn möglich. Bei einer zweidimensionalen Basis-Matrix existieren beispielsweise acht direkte Nachbarn für jedes nicht am Rande liegendes Feld. Für die Glättungsoperation kommt prinzipiell jeder Algorithmus mit Tiefpasscharakteristik infrage, um die Dynamik zu reduzieren. Bei der Glättungsoperation kann es sich beispielsweise um eine gleitende Mittelwertbildung (gewichtet oder ungewichtet) oder um eine Tiefpassfilterung handeln. Auch eine Summenbildung (gewichtet oder ungewichtet) kann als Glättungsoperation benutzt werden.

Es ist möglich, dass die Auswertungsrichtung der Glättungsoperation der ersten Richtung entspricht, also der Richtung, in welcher die Sonden eines Sonden-Arrays nebeneinanderliegen. Auf diese Weise können die Signalinformationen von zwei oder mehr nebeneinanderliegenden Sonden (gegebenenfalls auch Sonden-Array-übergreifend) geglättet werden. Die Glättung kann über mehrere Kanalnummern erfolgen. Durch eine derartige Glättung kann das Signal/Rausch-Verhältnis verbessert werden, wenn statistisches Rauschen vorliegt. Es kann vorgegeben werden, über wie viele Signale bzw. Sonden oder Prüfspuren eine Glättungsoperation ausgeführt werden soll. Die ausgewählte Anzahl der Sonden bzw. Prüfspuren, über die integriert wird, bestimmt die "effektive Sondenbreite", die dadurch generiert werden kann. Die Anzahl kann z.B. von zwei bis zehn betragen, ggf. aber auch bei mehr als zehn liegen, z.B. im Bereich zwischen 10 und 30. Hierdurch kann eine Anpassung der Prüfungscharakteristik an eine Mindestfehlerlänge erfolgen.

Alternativ oder zusätzlich ist es auch möglich, dass die Auswertungsrichtung einer Auswertungs-Operation der zweiten Richtung entspricht, welche senkrecht zu der ersten Richtung verläuft, in welcher die Sonden nebeneinanderliegen. Die zweite Richtung kann exakt oder ungefähr der Abtastrichtung entsprechen und korrespondiert mit der Zeitachse der Prüfung. Zu den Auswertungs-Operationen, die in der zweiten Richtung durchgeführt werden können, zählen insbesondere die oben erwähnten Filterungs-Operationen, zu denen auch die Glättungsoperation gehört.

Insbesondere ist es auch möglich, in der zweiten Richtung eine Fehlertyp-abhängige BandpassFilterung durchzuführen. Diese kann gegebenenfalls die oben erwähnte, außerhalb der Basis-Matrix stattfindende, vom Fehlertyp-abhängige Filterung ersetzen. Auch bei dieser Bandpassfilterung in der zweiten Richtung können ein oder mehrere Bandpassfilter mit einstellbaren Grenzfrequenzen realisiert werden, die jeweils auf einen bestimmten Fehlertyp abgestimmt sind.

Es ist bekannt, dass sich die Höhe von Streuflusssignalen eines Fehlers verringert, je mehr der Fehler von der (im Hinblick auf die Prüfung idealen) orthogonalen Lage zur Magnetisierungshauptrichtung abweicht. Dadurch kann es sein, dass Schrägfehler bei der Prüfung nicht erkannt oder hinsichtlich ihrer Größe und Relevanz falsch eingeschätzt werden. Verfahren und Vorrichtung gemäß der beanspruchten Erfindung sind in der Lage, auch bei Schrägfehlern aussagekräftige Prüfergebnisse zu liefern. Hierzu ist bei manchen Ausführungsformen vorgesehen, dass die Auswertungsrichtung bei mindestens einer Auswertungs-Operation einer Schrägrichtung entspricht, die quer zur ersten Richtung und quer zur zweiten Richtung verläuft. Es sind auch Auswertungen in unterschiedliche Schrägrichtungen möglich, die unterschiedliche Winkellagen für einen Schrägfehler repräsentieren.

Um den Einfluss der Schräglage des Fehlers gegenüber der Magnetisierungshauptrichtung zu berücksichtigen, ist vorzugsweise eine Schrägfehler-Kompensationsoperation vorgesehen, in welcher eine Winkeldifferenz zwischen einer Schrägfehler-Richtung und einer Feldlinienrichtung des Magnetisierungsfeldes bestimmt und ortsabhängige Signaldaten eines Schrägfehlers mit einem von der Winkellage abhängigen Kompensierungsfaktor korrigiert werden. Hierbei kann man sich auf empirisch oder analytisch oder auf in Abgleichprozeduren festgestellte Zusammenhänge stützen, die beispielsweise in einer Look-up-Tabelle eines Speichers der Vorrichtung hinterlegt sein können.

Besondere Varianten des Verfahrens in der Vorrichtung sind gekennzeichnet durch eine automatische Ermittlung der Winkellage von Schrägfehlern, die in einer quer zur ersten und zur zweiten Richtung verlaufenden Schrägrichtung verlaufen. Diese Verfahren können ohne Vorab-Wissen der zu erwartenden Schräglagen eine optimierte Schrägfehlerdetektion ermöglichen.

Bei einer Variante der automatischen Ermittlung der Winkellage von Schrägfehlern werden die Felder der Basis-Matrix automatisch über mehrere Schrägrichtungen in unterschiedliche Auswertungsrichtungen innerhalb eines vorgebbaren Winkelbereichs ausgewertet und es wird unter Berücksichtigung der bekannten und beispielsweise in einer Tabelle gespeicherten Winkelabhängigkeit der Signalamplitude von Schrägfehlern diejenige Schrägrichtung ermittelt, in welcher eine maximal mittlere Signalamplitude (unter Berücksichtigung der Winkelabhängigkeit) auftritt. Diese Schrägrichtung entspricht dann der Ausrichtung bzw. Winkellage des Schrägfehlers. Bei der automatischen Ermittlung der Winkellage können sozusagen bestimmte vorgebbare Winkelbereiche in vorgebbaren Schrittweiten automatisch gescannt werden, um diejenige Schrägrichtung zu ermitteln, in welcher ein Schrägfehler ausgerichtet ist.

Langgestrecktes, metallisches Prüfmaterial kann zum Beispiel produktionsbedingte oder prozessbedingte Störzonen aufweisen, die sich zumeist in Längsrichtung des Prüfgutes oder in einem kleinen Winkel zur Längsrichtung erstrecken. Beispielsweise können Nähte von geschweißten Rohren oder durch Streck-Reduzierwalzwerke verursachte Wanddickenabweichungen, sogenannte Innenpolygone, die Prüfung beeinträchtigen, indem durch diese Störzonen Signalanteile generiert werden, die die Defekt-Prüfung beeinträchtigen. Derartige Probleme können bei Ausführungsformen des Verfahrens und der Vorrichtung dadurch unterdrückt werden, dass mindestens eine Auswertungs-Operation eine Differenzbildungs-Operation ist, in welcher eine Differenz von ortsabhängigen Signaldaten von zwei in einer Differenzbildungsrichtung und in einem Differenzabstand zueinander liegenden Feldern der Basis-Matrix ermittelt wird. Diese Möglichkeit zur Entstörung von Signalen wird anhand von Ausführungsbeispielen später noch näher erläutert.

Es ist dabei beispielsweise möglich, dass die Differenzbildungsrichtung der ersten Richtung entspricht. Dadurch ist es beispielsweise möglich, bei rotierenden Prüfsystemen die Signale auszublenden, welche von Längsnähten an Rohren herrühren. Es ist auch möglich, dass die Differenzbildungsrichtung schräg zur ersten Richtung verläuft. Hierdurch können Signale ausgeblendet werden, welche beispielsweise von Längsnähten mit einem gewissen Drall herrühren. Es können mehrere Differenzbildungs-Operationen in unterschiedliche Differenzbildungsrichtungen und/oder über unterschiedliche Differenzabstände durchgeführt werden, um die Signalanteile von Störungen unterschiedlicher Ursachen zu beseitigen und somit die gewünschte Defektcharakterisierung zu verbessern. Es ist auch möglich, dass die Richtung eines oder mehrerer Störer automatisch erkannt wird und die Differenzbildungs-Operation auf diese Richtungen angewandt wird.

Bei einer Variante wird der Differenzabstand auf die für den jeweiligen Prozess vorgegebene Mindestfehlerlänge abgestimmt, wobei der Differenzabstand zwischen der Mindestfehlerlänge und dem Fünffachen der Mindestfehlerlänge liegt. Hierdurch kann ein Kompromiss zwischen einer optimalen Störsignalunterdrückung (diese verlangt grundsätzlich einen möglichst großen Differenzabstand) und dem Erhalt der Fehlerinformation (diese verlangt grundsätzlich einen Differenzabstand in der Größenordnung der Mindestfehlerlänge und ist Fehlertyp-abhängig) erzielt werden.

Für die Durchführung der einzelnen Verfahrensschritte sind an der Vorrichtung zur Streuflussprüfung geeignete Einrichtungen vorgesehen. Die einzelnen Verfahrensschritte können nach Digitalisierung der zunächst analog vorliegenden Sondensignale durch geeignete Module einer Auswertungssoftware realisiert werden.

Die Anzeige von Defekten, die Markierung defekter Stellen etc. können ähnlich wie bei konventionellen Prüfverfahren und Prüfvorrichtungen realisiert werden.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
Fig. 1 Teilsysteme eines Ausführungsbeispiels einer Vorrichtung zur Streuflussprüfung von ferromagnetischem Prüfgut mit einem rotierenden Teilsystem (Fig. 1A) und einem stationären Teilsystem (Fig. 1B);
Fig. 2 Fehlertyp-spezifische Streuflussfelder an einen Schnitt durch ein Rohr;
Fig. 3 Details zur Auslegung der Sondenanordnung für ein rotierende Teilsystem gemäß einem Ausführungsbeispiel;
Fig. 4 Details zur Auslegung der Sondenanordnung für ein stationäres Teilsystem gemäß einem Ausführungsbeispiel;
Fig. 5 Details zur Auslegung der Sondenanordnung für ein rotierende Teilsystem gemäß dem Stand der Technik (SdT);
Fig. 6 ein Ausführungsbeispiel einer Auswertungseinrichtung;
Fig. 7 Signale bei einer Glättungsoperation durch Mittelwertbildung bei einer Längsfehlerprüfung (Fig. 7A) und Querfehlerprüfung (Fig. 7B);
Fig. 8 in Fig. 8A ein Beispiel für eine Basis-Matrix bei einem rotierenden System, wobei in den einzelnen Feldern Signaldaten aus nicht-gleichgerichteten Sondensignalen eingetragen sind und in Fig. 8B ein Diagramm, in welchem auf der x-Achse die Längsposition (Kanalnummer) und auf der y-Achse die Signalamplitude A der einzelnen Signale der einzelnen Kanäle aufgetragen ist;
Fig. 9 in Fig. 9A dieselbe Matrix wie Fig. 8A nach einer gleitenden Mittelwertbildung über jeweils fünf Sondenbreiten und in Fig. 9B die entsprechenden geglätteten Signalamplituden;
Fig. 10 Darstellungen entsprechend den Darstellungen aus Fig. 8 für eine Schrägfehlerdetektion mit Mittelwertbildung in einer Schrägrichtung;
Fig. 11 Darstellungen entsprechend den Darstellungen aus Fig. 9 für eine Schrägfehlerdetektion nach der Mittelwertbildung in Schrägrichtung;
Fig. 12 eine Auswertung von Schrägfehlern in unterschiedliche Auswertungsrichtungen;
Fig. 13 Signalverläufe bei einer Differenzbildungsoperation, wobei Fig. 13A und 13B Signale zweier in einem Differenzabstand zueinander liegenden Sonden eines rotierenden Systems und Fig. 13C das Differenzsignal zeigen.

### DETAILLIERTE BESCHREIBUNG DER AUSFÜHRUNGSBEISPIELE

Ausführungsbeispiele der beanspruchten Erfindung werden im Folgenden anhand einer Vorrichtung zur Streuflussprüfung von ferromagnetischem Prüfgut in Form von warm gewalzten ferromagnetischen Rohren im Durchlaufverfahren erläutert. Die Vorrichtung ist für den Nachweis von Defekten bzw. Unvollkommenheiten oder Ungänzen unterschiedlicher Art ausgelegt und kann beispielsweise Walzfehler sowohl an der Rohrinnenseite (Innenfehler) als auch an der Rohraußenseite (Außenfehler) zuverlässig detektieren. Dabei können sowohl Längsfehler (Fehler mit Hauptausdehnungsrichtung parallel zur Rohrlängsachse) als auch Querfehler (Fehler mit Haupterstreckungsrichtung in Umfangsrichtung bzw. senkrecht zur Rohrlängsachse) und Schrägfehler (quer zur Längsrichtung und zur Umfangsrichtung) zuverlässig aufgefunden und charakterisiert werden.

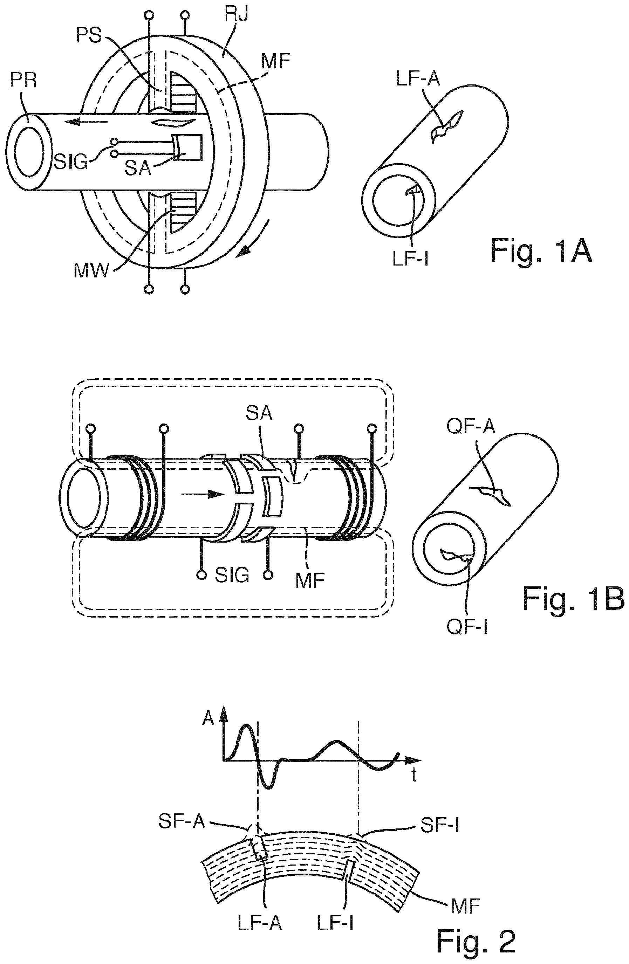

Bei einer Ausführungsform sind zwei Teilsysteme in einem Multiprüfblock integriert. Für die Längsfehlerprüfung ist ein rotierendes Teilsystem vorgesehen, dessen Grundprinzip anhand von Fig. 1A erläutert wird. Für die Querfehlerprüfung ist ein stationäres Teilsystem mit einer ringförmigen Anordnung mit mehreren um den Umfang der Anordnung verteilten Sensor-Arrays beispielsweise entsprechend der Anordnung in Fig. 1B vorgesehen. Die Teilsysteme sind in Durchlaufrichtung des Rohres hintereinander angeordnet, wobei die Reihenfolge beliebig sein kann. Bei anderen, nicht näher dargestellten Ausführungsformen kann ein einziges System ausreichen, z.B. ein einziges rotierendes System.

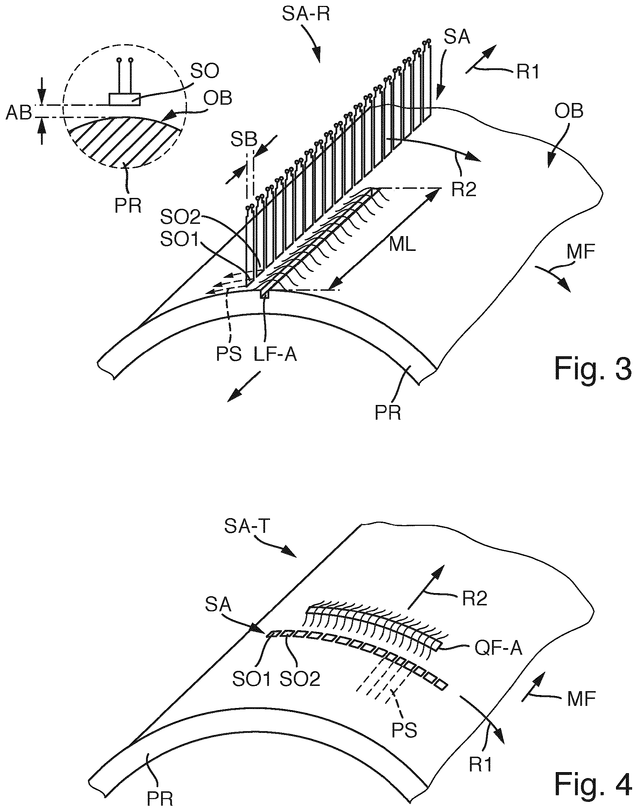

Das rotierende Teilsystem hat einen Rotierkopf mit einem um das Prüfgut PR herum rotierenden Ringjoch RJ, welches an diametral gegenüberliegenden Stellen radial zur Prüflingsoberfläche ausgerichtete Polschuhe PS aufweist, an denen Magnetisierungswicklungen MW angebracht sind. Hierdurch wird im Inneren des Prüflings ein magnetischer Fluss bzw. ein Magnetfeld MF (Gleichfeld) erzeugt, dessen Feldlinien in Umfangsrichtung des Prüflings, also senkrecht zur Längsrichtung des Rohres, verlaufen. An dem Rotor sind jeweils in Umfangsrichtung zwischen den Polschuhen Prüfköpfe angeordnet, die jeweils ein oder mehrere Sonden-Arrays SA enthalten, wobei jedes Sonden-Array eine Vielzahl von einzelnen Sonden umfasst. Das Ringjoch zusammen mit den Polschuhen und den Prüfköpfen dreht sich bei der Prüfung je nach Typ der Sonden mit Drehzahlen zwischen ca. 60 und ca. 1200 min⁻¹. Das zu prüfende Rohr wird gleichzeitig mit einer Prüfgeschwindigkeit (beispielsweise bis zu 3 m/s oder mehr) in Durchlaufrichtung vorwärts transportiert. Die Prüfköpfe schleifen dabei auf der Rohroberfläche und tasten diese auf einer schraubenförmigen Bahn lückenlos ab. Die Sonden SO des Sonden-Arrays sind innerhalb der Prüfköpfe in einem kleinen Prüfabstand AB zur Oberfläche OB des Prüfguts angeordnet, der zum Beispiel in der Größenordnung von 0,2 mm bis 1 mm liegen kann (vgl. Fig. 3). Dadurch, dass die Magnetfeldlinien in Umfangsrichtung verlaufen, ist diese Prüfung besonders empfindlich für Längsfehler LF-A an der Rohraußenseite und Längsfehler LF-I an der Rohrinnenseite, die den Magnetfluss in Umfangsrichtung maximal stören und dadurch starke Streuflussfelder (Fig. 2) erzeugen.

Bei dem stationären System (Fig. 1B) für die Querfehlerprüfung wird eine nicht näher dargestellte Gleichfeld-Magnetisierungseinrichtung verwendet, die ein Magnetfeld MF in Längsrichtung des durchlaufenden Rohres erzeugt. Zwei Ringe von Sonden-Arrays mit in Umfangsrichtung auf Lücke angeordneten Sonden-Arrays SA sind ringförmig um den Prüfling angeordnet und tasten bei der Durchlaufprüfung den Prüfling in dessen Längsrichtung ab. Da der Magnetfluss in Längsrichtung verläuft, wird er besonders stark durch in Umfangsrichtung verlaufende Querfehler an der Außenseite (QF-A) und Querfehler an der Innenseite (QF-I) gestört, so dass diese Anordnung für Querfehlerprüfung hohe Prüfempfindlichkeit aufweist.

Die elektrischen Signale SIG der Sonden der Sonden-Arrays, d.h. die Sondensignale, werden einer gemeinsamen Auswerteeinrichtung zugeführt, in der die Qualifizierung der Defekte erfolgt.

Jeder Typ von Fehlern verursacht bestimmte, Fehlertyp-spezifische Streuflussfelder, deren Eigenschaften an der Signalform und der in dem Signal enthaltenen Frequenzen erkannt werden kann. Fig. 2 zeigt beispielsweise einen Schnitt durch ein Rohr senkrecht zur Längsrichtung sowie die in Umfangsrichtung verlaufenden Magnetfeldlinien des Magnetisierungsfeldes MF. Ein in Längsrichtung verlaufender Außenfehler LF-A erzeugt ein in der Nähe des Außenfehlers relativ eng konzentriertes Streufluss-Feld SF-A. Ein in Längsrichtung verlaufender Innenfehler LF-I gleicher Dimensionen erzeugt dagegen auf der Rohraußenseite ein stärker örtlich verschmiertes bzw. ausgeweitetes oder verbreitertes Streuflussfeld SF-I mit geringerer Amplitude. Oberhalb der Streuflussfelder sind jeweils typische Signalformen der Sondensignale beim Überlauf einer Sonde in Umfangsrichtung gezeigt. Dabei entspricht die y-Achse der Signalamplitude A und die x-Achse der Zeit t bzw. dem Ort beim Umlauf der Sonde. Es ist unmittelbar ersichtlich, dass der Außenfehler ein Sondensignal mit höherfrequenten Signalanteilen verursacht als ein Innenfehler. Dadurch ist plausibel, dass unterschiedliche Fehlertypen unter anderem am Frequenzspektrum der jeweils erzeugten Sondensignale erkannt, identifiziert und gegebenenfalls unterschieden werden können.

Anhand der Fig. 3 und 4 werden nun Details zur Auslegung der Sondenanordnungen für das rotierende System (Fig. 3) und das stationäre System (Fig. 4) erläutert. Die Sondenanordnung SA-R für das rotierende System hat eine Vielzahl von nominell identischen einzelnen Sonden SO1, SO2 etc., die ein Sonden-Array SA bilden und in einer geraden Reihe entlang einer ersten Richtung R1 angeordnet sind, die parallel zur Längsachse des Rohres verläuft. Das Sonden-Array SA ist in einem Prüfkopf eingebaut. Bei rotierendem System bewegt sich die Sondenanordnung als Ganzes in Umfangsrichtung des Prüflings um den Prüfling herum in einer zweiten Richtung R2, die senkrecht zur ersten Richtung R1 verläuft. Durch die gleichzeitig ablaufende Längsbewegung des Prüflings PR tastet jede der einzelnen Sonden SO1, SO2 eine relativ schmale Prüfspur PS ab, die spiralförmig um den Prüfling herum verläuft, wobei die Prüfspur schräg zur ersten und zur zweiten Richtung verläuft. Alle Sonden des Sonden-Arrays tasten gemeinsam eine relativ hohe Prüfbreite mit einer Vielzahl von zueinander parallelen Prüfspuren ab.

Bei dem gezeigten Außen-Längsfehler LF-A handelt es sich um einen Normdefekt mit einer für diese Prüfung definierten Mindestfehlerlänge ML, die im Beispielsfall 25 mm beträgt. Die Sondenbreiten SB der einzelnen Sonden SO1, SO2 etc. in der ersten Richtung betragen nur einen Bruchteil der Mindestfehlerlänge. Im Beispielsfall liegt die in der ersten Richtung R1 gemessene Sondenbreite im Bereich zwischen 0,5 mm und 3 mm, was hier im Bereich zwischen 50% des Prüfabstands und ca. dem doppelten bis dreifachen Prüfabstand entspricht.

Eine entsprechende Anordnung ergibt sich bei der Sondenanordnung SA-T für die Querfehlerprüfung (vgl. Fig. 4). Die Sondenanordnung SA-T hat eine Vielzahl von Einzelsonden SO1, SO2 etc., die in der ersten Richtung R1 in Reihe nebeneinander angeordnet sind, wobei die erste Richtung hier der Umfangsrichtung des Prüfguts PR entspricht. Die Sondenanordnung ist stationär, während sich das Prüfgut parallel zu seiner Längsrichtung bewegt, so dass das Sonden-Array die Prüflingsoberfläche in einer Abtastrichtung abtastet, die der zweiten Richtung R2 senkrecht zur ersten Richtung R1 entspricht. Auch hier deckt jede einzelne Sonde eine relativ schmale Prüfspur PS ab, wobei die Gesamtheit der Prüfspuren in Umfangsrichtung eine vielfach größere Prüfbreite der Sondenanordnung ergibt. Das in Längsrichtung des Rohres verlaufende Magnetfeld MF wird an einem Querfehler QF-A aus dem Prüflingsmaterial herausgedrängt und mittels der Sonden des Sonden-Arrays SA detektiert. Auch hier beträgt die in der ersten Richtung R1 gemessene Sondenbreite SB der einzelnen Sonden nur ca. 0,5 mm bis 3 mm, während der Außen-Querfehler QF-A die für die Prüfung vorgesehene Mindestfehlerlänge von 25 mm hat.

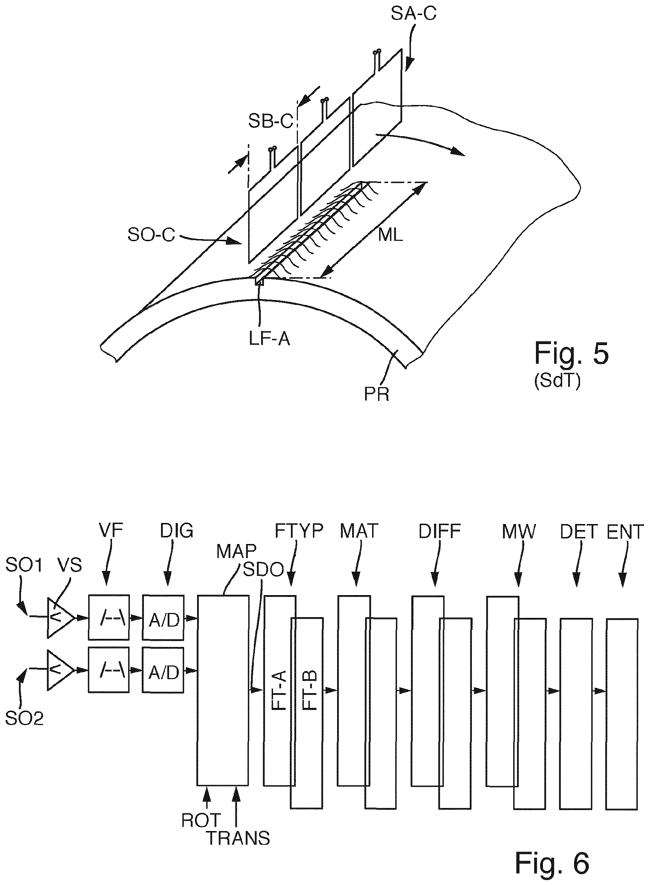

Die gegenüber dem Stand der Technik (SdT) verkleinerten Sondenbreiten werden anhand von Fig. 5 veranschaulicht, in welcher für ein herkömmliches rotierendes Prüfsystem ein konventionelles Sonden-Array SA-C mit drei Einzelsonden SO-C bei der gleichen Prüfsituation wie in Fig. 3 gezeigt ist. Die einzelnen Sonden sind in herkömmlicher Weise so dimensioniert, dass ihre Sondenbreite SB-C in der ersten Richtung (Längsrichtung des Rohres) ca. 50% der Mindestfehlerlänge ML, das heißt der Testfehlerlänge des Außenlängsfehlers LF-A (25 mm) entspricht.

Während sich die Ausdehnung der Sondenbreite bei herkömmlichen Systemen an dieser Mindestfehlerlänge orientierte, orientiert sich die Sondenbreite der einzelnen Sonden bei Ausführungsbeispielen der Erfindung an der kleinsten zu erwartenden Streuflussbreite, die unter anderem vom Prüfabstand der Sonde zur Materialoberfläche bestimmt wird. Die neuartigen Sondenanordnungen können die Prüflingsoberfläche mit wesentlich höherer Ortsauflösung abtasten als herkömmliche Sondenanordnungen für vergleichbare Zwecke. Durch geeignete Signalverarbeitung bzw. Auswertung der Sondensignale können Fehler mit der Mindestfehlerlänge dennoch mindestens mit vergleichbarer Prüfempfindlichkeit detektiert werden, wobei sich zusätzlich zahlreiche weitere Auswertungsmöglichkeiten und zahlreiche andere Detektionsoptionen ergeben.

Zur Erleichterung des Verständnisses der nachfolgenden Ausführung zeigt Fig. 6 ein Blockschaltbild der Auswertungseinrichtung AW zur Gesamtauswertung von Sondensignalen bei einer Ausführungsform, wobei die einzelnen Komponenten einzelne Schritte der Signalauswertung und/oder Komponenten der Auswertungseinrichtung repräsentieren. Gezeigt sind beispielhaft Pfade für Sondensignale von zwei Sonden SO1, SO2, wobei für jede Sonde ein entsprechender Pfad vorgesehen ist.

Die Sondensignale der ersten Sonde SO1 durchlaufen zunächst eine Verstärkeranpassung VS, bevor sie in einer Vorfiltereinrichtung VF vorgefiltert werden. Die Signalkomponenten jeder einzelnen Sonde werden dabei mit einem Bandpass gefiltert, dessen Grenzfrequenzen in Abhängigkeit der Sonden-Überlaufgeschwindigkeit, des Prüfabstands zur Materialoberfläche, der Wanddicke sowie der kleinsten bzw. größten zu detektierenden Fehlerbreite auf die kleinste bzw. größte zu erwartende Frequenz der Streuflusssignale eingestellt wird bzw. werden kann. Durch die grobe Vorfilterung können eindeutig nicht relevante Signalanteile herausgefiltert werden, so dass sich die nachfolgende Auswertung vereinfacht.

Die bipolaren, durch die Bandpassfilterung vorgefilterten Signale werden dann durch eine Analog-Digital-Filtereinheit DIG in digitale Signalinformation umgewandelt bzw. digitalisiert.

Eine nachfolgende Mapping-Einheit MAP ist dazu ausgelegt, für jedes Sondensignal die mit diesem Sondensignal verknüpfte Signalinformation mit einer Ortsinformation zum Entstehungsort des Sondensignals zu verknüpfen. Hierzu verarbeitet die Mapping-Einheit unter anderem Signale von Weggebern TRANS und Drehgebern ROT. Mittels eines Drehgebers wird beispielsweise die Information über die Drehposition des rotierenden Systems ermittelt, um die Position einer Sonde bei Generierung des zugehörigen Signals am Umfang des Prüflings zu identifizieren. Weggeber dienen der Identifikation der entsprechenden Position in Längsrichtung des Prüflings. Am Ausgang der Mapping-Einheit liegen dann ortsabhängige Signaldaten SDO vor, die in nachfolgenden Auswertungs-Operationen weiterverarbeitet werden.

Die magnetfeldempfindlichen Sonden, die beispielsweise mit Spulen, Hall-Sensoren oder Ähnlichem aufgebaut sein können, erfassen vorzugsweise die Normalkomponente des Streuflusses. Alternativ oder zusätzlich kann auch die Tangentialkomponente des Streuflusses oder der komplette Vektor des Streuflusses (Bx-, By- und Bz-Komponente) erfasst werden.

Der Mapping-Einrichtung MAP sind Fehlertyp-abhängige Bandpässe FTYP für eine Fehlertyp-abhängige Bandpassfilterung nachgeschaltet. Diese ermöglichen die Filterung jedes einzelnen Sondensignals bzw. der entsprechenden ortsabhängigen Signaldaten gemäß vorgebbarer Grenzfrequenzen, die entsprechend der zu erwartenden Signalfrequenz für die verschiedenen Fehlertypen (zum Beispiel Längs- bzw. Querfehler, Außen/Innenfehler, Bohrungen mit verschiedenen Durchmessern, natürliche Fehler wie Schalen etc.) eingestellt werden kann. Bei der Vorrichtung ist die Anzahl der Bandpässe konfigurierbar, kann also bei Bedarf auf die Prüfsituation optimal abgestimmt werden. Obwohl in Fig. 6 nur zwei Bandpässe für Fehlertyp A (FT-A) und Fehlertyp B (FT-B) gezeigt sind, können wesentlich mehr als zwei Fehlertyp-abhängige Bandpässe mit entsprechenden Filtermöglichkeiten bereitgestellt werden, um für eine Vielzahl von Fehlern spezifische Filterungen vorzunehmen.

Alle nachfolgenden Auswertungs-Operationen können für jeden Fehlertyp gesondert vorgenommen werden, so dass eine Fehlertyp-spezifische Signalauswertung erreicht wird.

Im Beispielsfall folgt im Signalfluss der Auswertungseinrichtung eine Matrixbildungs-Einheit MAT, in welcher eine Matrixbildungs-Operation durchgeführt wird. Bei der Matrixbildungs-Operation werden die ortsabhängigen Signal-Daten oder daraus abgeleitete Signal-Daten, die im Beispielsfall noch Fehlertyp-abhängig gefiltert wurden, in ortsrichtig zugeordneten Feldern einer Basis-Matrix gespeichert. Hierzu kann ein spezieller Speicherbereich eines Speichers der Auswerteeinrichtung vorgesehen sein.

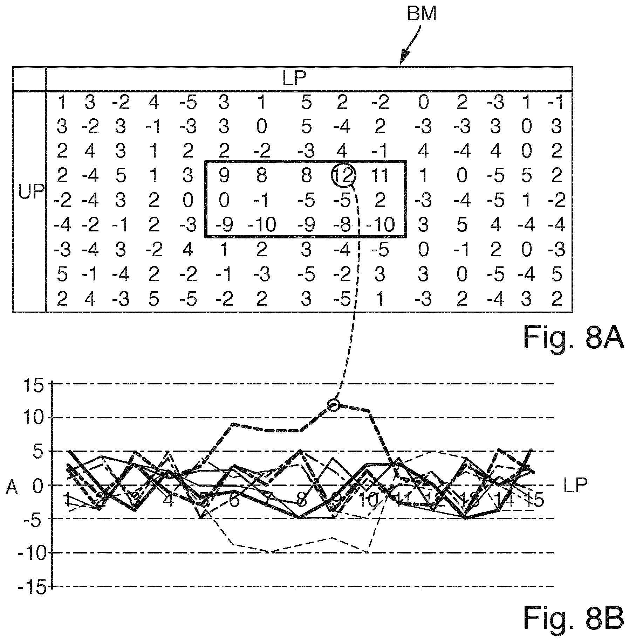

Im Beispielsfall wird aus den vorgefilterten Streuflusssignalen für jeden Bandpass, das heißt für jeden Fehlertyp, eine mehrdimensionale Basis-Matrix mit den Streuflusswerten (bzw. entsprechenden Daten) und deren Ortskoordinaten (bzw. entsprechenden Daten) erzeugt. Im Beispielsfall können die Informationen, die bei der Matrixbildung berücksichtigt werden, in drei Dimensionen unterteilt werden (vgl. Fig. 8 bis 12)

Die erste Dimension enthält die Signalinformation in Form einer Amplitude des StreuflussSignals. Hier wird die nicht-gleichgerichtete bipolare Signalinformation berücksichtigt. Es kann beispielsweise nur die Normalkomponente des Streuflusses oder nur die Horizontalkomponente des Streuflusses oder aber der komplette Streuflussvektor mit Bx-, By- und Bz-Komponente gespeichert und für die weitere Auswertung vorgehalten werden.

In der zweiten und dritten Dimension werden die Ortsinformationen kodiert. Beispielsweise wird in der zweiten Dimension die Längsposition LP des Entstehungsortes des Streuflusswertes am Prüfgut gespeichert. Bei einem rotierenden System liegt hier die Auflösung im Bereich einer Sondenbreite einer Einzelsonde. Bei dem stationären System entspricht die Auflösung bezüglich der Längsposition der an die Maximalfrequenz des der Matrix zugrundeliegenden Bandpasses angepassten Abtastfrequenz.

Die dritte Dimension entspricht der Umfangsposition UP des Entstehungsortes des Streuflusswertes. Hier entspricht die Auflösung beim rotierenden System der an die Maximalfrequenz des der Matrix zugrundeliegenden Bandpasses angepassten Abtastfrequenz, während beim stationären System die Auflösung in Umfangsrichtung einer Sondenbreite einer Einzelsonde entspricht.

Innerhalb der Basis-Matrizen können unterschiedliche Auswertungs-Operationen unter Verwendung der ortsabhängigen Signaldaten durchgeführt werden. Im Folgenden werden einige Beispiele erläutert.

Die Signale der einzelnen Sonden enthalten nach den vorgeschalteten Bandpassfilterungen innerhalb der weiter zu verarbeitenden Frequenzbereiche die gesuchte Nutzinformation, gegebenenfalls überlagert durch Störinformation, die beispielsweise auf an sich nicht funktionskritische Oberflächenrauheit zurückgeht. Um die Zuverlässigkeit der Auswertungsergebnisse zu verbessern, kann beispielsweise eine Glättungsoperation über eine vorgegebene Anzahl von zueinander benachbarten Feldern einer Basis-Matrix durchgeführt werden.

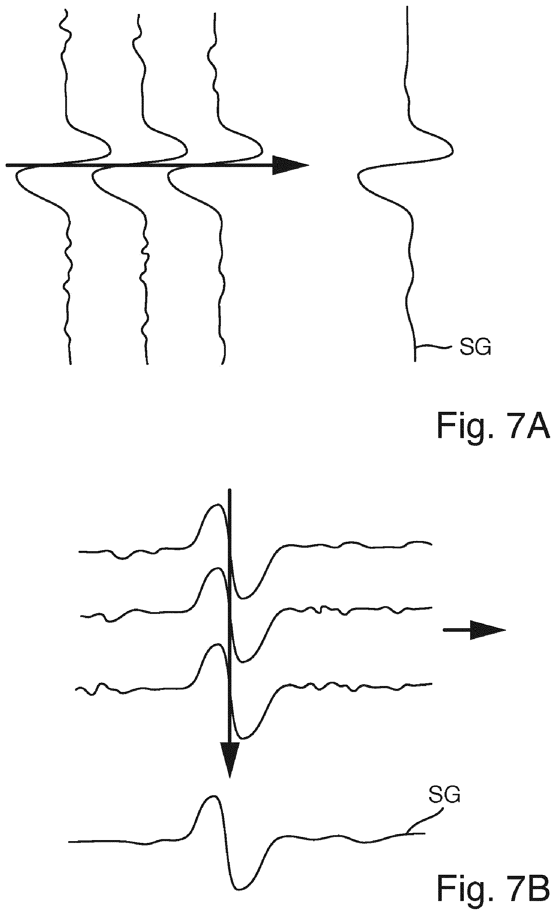

Anhand der Fig. 7 bis 9 wird erläutert, wie durch eine gleitende Mittelwertbildung die Qualität der weiter zu verarbeitenden Signale verbessert werden kann. Hierzu hat die Auswerteeinrichtung in Fig. 6 eine Mittelwert-Bildungseinheit MW. Fig. 7 zeigt hierzu in Fig. 7A eine Mittelwertbildung über drei Einzelsondensignale, die jeweils die Normalkomponente des Streuflusses anzeigen, bei einer Längsfehlerprüfung. In Fig. 7B sind entsprechende Einzelsondensignale bei einer Querfehlerprüfung gezeigt. Es ist erkennbar, dass die durch Mittelwertbildung geglätteten Signale SG ein besseres Signal-Rausch-Verhältnis aufweisen als die Ausgangssignale.

Fig. 8A zeigt ein Beispiel für eine Basis-Matrix BM für ein rotierendes System, bei dem in den einzelnen Feldern Signaldaten aus nicht-gleichgerichteten (bipolaren) Sondensignalen eingetragen sind. Die Signaldaten sind durch vorzeichen-behaftete Zahlen symbolisiert. In horizontaler Richtung ist die zweite Dimension der Basis-Matrix aufgetragen, nämlich die Längsposition LP des Entstehungsorts des jeweiligen Signals. In der dazu senkrechten Richtung ist die dritte Dimension aufgetragen, nämlich die Umfangsposition UP. Im Beispiel eines rotierenden Prüfsystems entspricht die Längsposition LP der Kanalnummer der einzelnen Sonden des Sonden-Arrays. Die Umfangsposition UP korreliert mit der Zeitachse der Prüfung. Fig. 8B zeigt auf der x-Achse die Kanalnummer, also die Längsposition LP, während auf der y-Achse die Signalamplitude A der einzelnen Signale (Kurven) der einzelnen Kanäle aufgetragen ist.

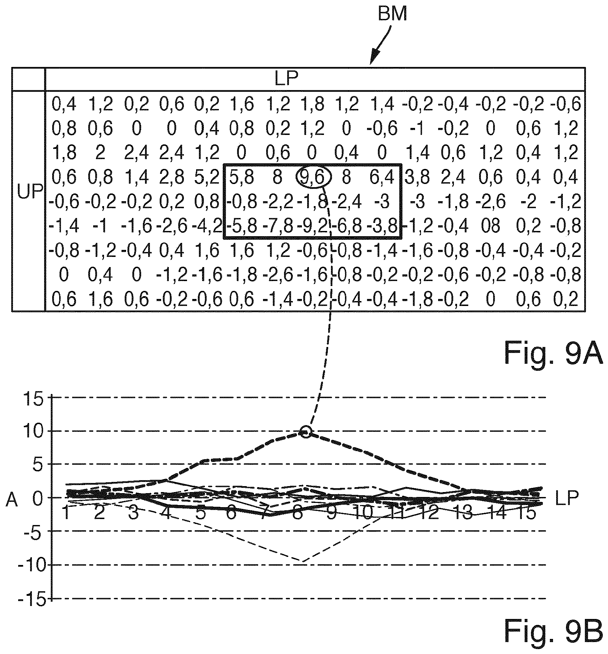

Fig. 9A zeigt dieselbe Matrix wie Fig. 8A, jedoch nach der gleitenden Mittelwertbildung über jeweils fünf Sondenbreiten. Fig. 9B zeigt die entsprechenden geglätteten Signalamplituden.

Die Mittelwertbildung wird so durchgeführt, dass innerhalb einer Basis-Matrix über eine konfigurierbare Anzahl von Sondenspuren ein gleitender Mittelwert gebildet wird. Im gezeigten Beispiel eines rotierenden Systems wird der Mittelwert in Längsrichtung des Rohrs, also parallel zur Rohrachse gebildet. Bei einem stationären System wäre die Glättungsrichtung bzw. Auswertungsrichtung identisch mit der Querrichtung des Rohrs. Sofern das Rauschen in den einzelnen Sondenspuren stochastisch auftritt, beispielsweise aufgrund gleichmäßig verteilter Oberflächenrauigkeiten am Prüfling, verbessert sich durch diese Mittelung über beispielsweise fünf Sonden das Signal-zu-Rausch-Verhältnis (S/N). Dies ist durch den Vergleich der Fig. 8B und 9B unmittelbar ersichtlich.

Alternativ oder zusätzlich zu einer gleitenden Mittelwertbildung, bei der die Summe der Signalamplituden der erfassten Einzelsonden durch die Anzahl der erfassten Einzelsonden geteilt wird, wäre auch eine Summenbildung möglich, bei der die Teilung durch die Anzahl der erfassten Sonden entfallen würde. Auch andere Auswertungen mit Tiefpasscharakteristik, beispielsweise eine Tiefpassfilterung, sind grundsätzlich geeignet, um die Glättung der Sondensignale und damit eine Reduktion der Dynamik zu erreichen. Im Allgemeinen können auch andere Arten der Filterung, Faltung oder Korrelation über mehrere Sondenspuren hinweg angewandt werden.

Die Anzahl der für die Mittelung bzw. Filterung zugrundeliegenden Prüfspuren ist bei manchen Ausführungsformen konfigurierbar. Die Anzahl kann bei Bedarf für jeden Auswertekanal unterschiedlich gewählt werden. Sie orientiert sich im Beispielsfall an der Mindestfehlerlänge des jeweiligen Auswertekanals für einen bestimmten Fehlertyp. Die Mindestfehlerlänge ist dabei diejenige Fehlerlänge, ab der die maximale Amplitude, d.h. die höchste Prüfempfindlichkeit, erreicht wird. Im Gegensatz zu konventionellen Prüfsystemen, bei denen die Sondenbreite durch die Mindestfehlerlänge fest vorgegeben wird, ist die Mindestfehlerlänge bei dem vorgeschlagenen System nun für jeden Fehlertyp konfigurierbar. Hierdurch ergibt sich unter anderem der Vorteil, dass sich dadurch die Reproduzierbarkeit von Fehlern, die kürzer als die Mindestfehlerlänge sind, verbessert. Diese Verbesserung ergibt sich unabhängig von der Länge der Fehler und unabhängig von einer eventuellen Überlappung der Sonden.

Die Auswertung ist nicht auf Auswertungsrichtungen beschränkt, die parallel oder senkrecht zur Achse des Prüflings verlaufen. Vielmehr ist es auch möglich, innerhalb einer Basis-Matrix gleitende Mittelwerte oder Summenwerte oder andere durch gemeinsame Auswertungen von ortsabhängigen Signaldaten ermittelbare Werte in beliebiger Winkellage quer zur Längsrichtung und Umfangsrichtung zu bilden. Die Anzahl der Auswertekanäle und deren Winkellage sind beim gezeigten Ausführungsbeispiel konfigurierbar. Alternativ oder zusätzlich können bei der Prüfvorrichtung auch ganze Winkelbereiche und Winkelschrittweiten innerhalb von Winkelbereichen vorgegeben werden. Die Auswertungssoftware ermittelt dann die gleitenden Mittelwerte oder Summenwerte oder andere Werte für alle konfigurierten Winkellagen bzw. für jeden einzelnen Schritt innerhalb eines vorgegebenen Winkelbereichs.

Die Auswertekanäle dienen der Erfassung von Schrägfehlern in beliebiger Winkellage. Bei einer Prüfvorrichtung, die ein rotierendes System mit einem stationären System kombiniert, können mit dem rotierenden System vorzugsweise Winkellagen von -45° (sogenannte "Left-Hand-Fehler") bis + 45° (sogenannte "Right-Hand-Fehler") von der Rohr-Längsachse eingestellt bzw. ermittelt werden. Das stationäre System kann dann beispielsweise Winkellagen von -45° bis +45° Abweichung von einem idealen Querfehler (Fehler in Umfangsrichtung) ermitteln. Somit können bei kombinierter Prüfung mit rotierenden Systemen und stationären Systemen Fehler in allen Orientierungen zuverlässig gefunden werden.

Eine automatische Ermittlung der Winkellage eines Fehlers kann beispielsweise dadurch erfolgen, dass nach der Ermittlung der gleitenden Mittelwerte (oder Summenwerte) für die einzelnen Winkelschritte die Signalmaxima innerhalb des Winkelbereichs ermittelt werden. Dabei wird bei dem Ausführungsbeispiel zusätzlich berücksichtigt, dass sich durch eine zunehmende Schräglage eines Fehlers relativ zum Verlauf der Feldlinien des Magnetisierungsfelds ein charakteristischer und berechenbarer Signalabfall ergibt. Bekanntermaßen verringert sich nämlich die Höhe eines Streuflusssignals, je stärker der Fehler bzw. die Orientierung des Fehlers von der idealen orthogonalen Lage zur Magnetisierungshauptrichtung abweicht. Dieser Signalabfall kann kompensiert werden, indem die Signale in Abhängigkeit von der konfigurierten oder gefundenen Winkellage verstärkt werden. Alternativ oder zusätzlich ist es auch möglich, dass diejenigen Schwellwerte, bei denen eine Signalamplitude als indikativ für einen Defekt angesehen wird, niedriger eingestellt werden als im Falle reiner Längsfehler oder Querfehler. Diese Schrägfehler-Kompensation wird bei der Mittelwertbildung für Schrägfehler berücksichtigt, z.B. indem die der eigentlichen Mittelwertbildung vorgeschaltet oder nachgeschaltet wird, so dass bei der Mittelwertbildung vergleichbare Signalamplitudenwerte miteinander verrechnet werden.

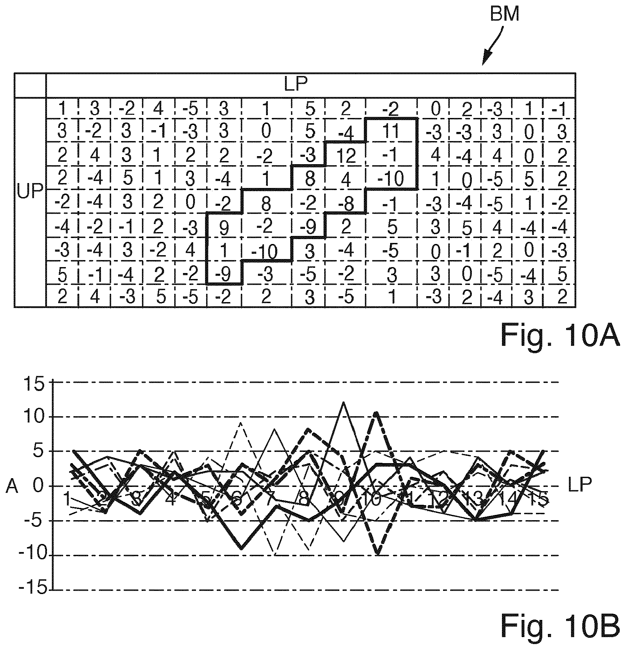

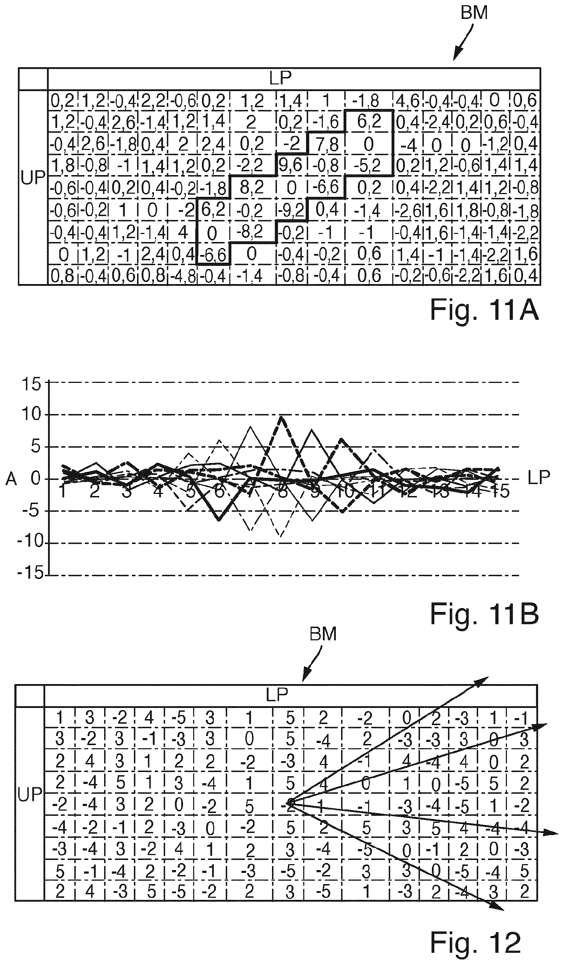

Zur Erläuterung zeigt Fig. 10A eine den Fig. 8A und 9A entsprechende Darstellung eines Schrägfehlers (grau hinterlegt), welcher bei -45° zur Längsrichtung und Querrichtung liegt ("Left-Hand-Fehler"). Fig. 10B zeigt die entsprechenden Signalamplituden A vor der Mittelwertbildung. Fig. 11A zeigt dieselbe Basis-Matrix, allerdings nach der gleitenden Mittelwertbildung über jeweils 5 Sondenbreiten in Richtung -45°. Fig. 11B zeigt die entsprechenden geglätteten Signalamplituden.

Anhand von Fig. 12 wird beispielhaft gezeigt, dass eine Mittelwertbildung (oder eine andere Auswertung) für Schrägfehler in mehreren unterschiedlichen Schrägrichtungen durchgeführt werden kann, also auch in solchen Richtungen, die mehr oder weniger als 45° von einer Längsrichtung bzw. Umfangsrichtung abweichen. Im Allgemeinen kann also eine winkelabhängige Bewertung der Signalamplituden über die ortsabhängigen Signaldaten der Basis-Matrix durchgeführt werden.

Langgestrecktes, metallisches Prüfgut kann produktionsbedingt und/oder prozessbedingt Störzonen aufweisen, die sich zumeist in Längsrichtung des Prüfmaterials oder in kleinen Winkeln schräg zur Längsrichtung erstrecken. Bei den Störzonen kann es sich beispielsweise bei geschweißten Rohren um die längs verlaufende Schweißnaht handeln. Bei Rohren, die durch ein Streckreduzierwalzwerk laufen, können systematische Wanddickenabweichungen, sogenannte Innenpolygone, auftreten. Derartige systematische Materialinhomogenitäten können zu Störsignalen führen, die die Defektprüfung beeinträchtigen. Die Signale dieser richtungsorientierten Störzonen können bei einer Ausführungsform mithilfe eines sogenannten Differenzbetriebs unterdrückt werden. Dazu ist bei der Vorrichtung aus Fig. 6 eine Differenzbildungs-Einheit DIFF vorgesehen, die eine Entstörung nach der fehlertypabhängigen Filterung und der Matrizenbildung vornimmt, aber vor der Bildung der gleitenden Mittelwerte bzw. Summenwerte.

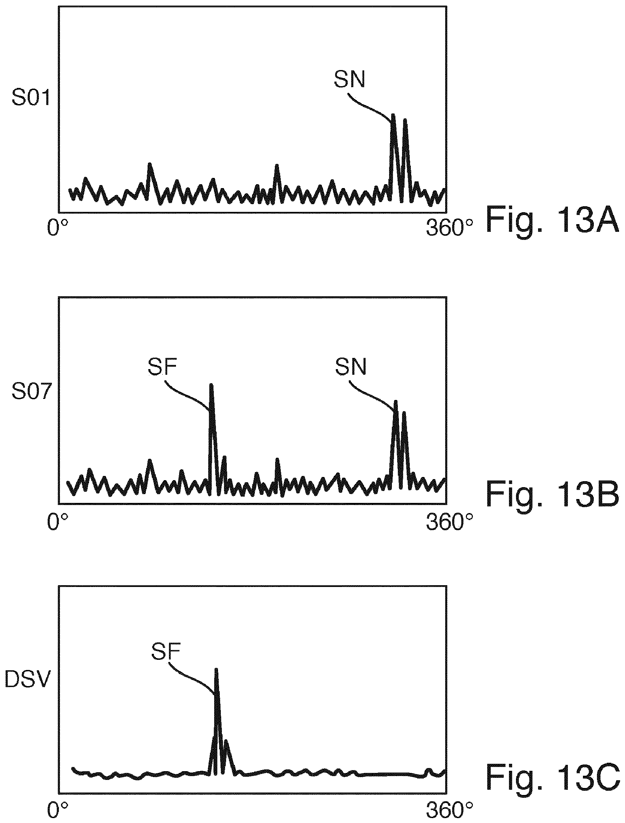

Zur Erläuterung des Prinzips zeigt Fig. 13 in 13A das Sondensignal einer ersten Sonde SO1 inklusive dem Signal SN einer Schweißnaht bei einer Rotation zwischen 0° und 360°. Fig. 13B zeigt das Signal der siebten Sonde SO7 eines Sonden-Arrays über den gleichen Winkelbereich, wobei das Signal SN der Schweißnaht bei der gleichen Winkellage auftritt, jedoch zusätzlich bei ca. 100° das Signal SF eines Fehlers zu erkennen ist. Fig. 13C zeigt einen Differenzsignalverlauf DSV, bei dem das Signal der ersten Sonde SO1 vom Signal der siebten Sonde SO7 in einer Differenzbildungs-Operation subtrahiert wurde. Es ist ersichtlich, dass durch die Differenzbildung das gleichartig in beiden Signalen auftretende Signal der Schweißnaht verschwindet und auch die Rauschamplitude reduziert wird, während das Signal SF des Fehlers erhalten bleibt. Es ist somit eine sehr effiziente Störunterdrückung durch Differenzbildung möglich.

Bei Verwendung von Sonden-Arrays mit kleiner Sondenbreite, also bei hochauflösenden Streuflussprüfungen, ist es nun möglich, die Differenzbasis, also den Differenzabstand zwischen den für die Differenzbildung verwendeten Sonden, in kleiner Schrittweise mit einer Rasterung von einer Sondenspurbreite auf den für den jeweiligen Fehlertyp optimalen Differenzabstand einzustellen. Die Differenzbildungs-Einheit enthält dafür eine Einstelleinrichtung zur Einstellung des Differenzabstands. Eine optimale Differenzbasis ist dann gefunden, wenn der Differenzabstand so klein wie möglich gewählt wird, damit kleine Abweichungen in der Längsausrichtung des Störers die Unterdrückung der Störsignale nicht zu stark beeinträchtigen. Andererseits sollte die Differenzbasis größer sein als die typische Fehlerlänge des jeweiligen Auswertekanals, da sonst die Differenzbildung die maximal möglichen Mittelwerte oder Summenwerte der für den jeweiligen Auswertungskanal typischen Fehlerlängen verringern könnte. Die typische Fehlerlänge ist hier die Summe der Sondenspurbreiten bei der Berechnung der gleitenden Mittelwerte.

Den verschiedenen Auswertungsoperationen folgt bei der Vorrichtung in Fig. 6 die Fehlerdetektion, die mittels einer Fehlerdetektions-Einheit DET z.B. durch Vergleich der eingehenden Signale mit vorgebbaren Schwellwerten durchgeführt wird (Schwellwertvergleich). In einer Nachfolgenden Entscheidungs-Einheit ENT wird nach vorgegebenen Kriterien entschieden, ob ein relevanter Defekt vorliegt, der dann z.B. in einer nachgeschalteten Markierungseinheit am Prüfling mittels Farbe markiert werden kann.

Weiterhin ist es bei dem Ausführungsbeispiel der Prüfvorrichtung möglich, für den Differenzbetrieb zusätzlich beliebige weitere Winkellagen zu konfigurieren oder automatisch zu ermitteln, so dass in den jeweiligen Auswertekanälen nicht nur die in Längsrichtung verlaufenden Störzonen, sondern auch Signale von schräg verlaufenden Störern unterdrückt werden können.

Bei der beschriebenen Auswertung der Differenzbildung werden im vorliegenden Fall die Vorzeichen der Streuflusssignale beachtet und beibehalten. Dadurch entsteht eine Phaseninformation, aus der die Lage des Fehlers auf dem Prüfmaterial rekonstruiert werden kann. Es ist auch möglich, mehrere Differenzwerte zu bilden. Bei einem Beispiel werden ein Signalzug in Transportrichtung des Prüfguts und ein Signalzug entgegen dieser Transportrichtung ermittelt. Anschließend wird der Mittelwert der beiden Differenzen gebildet. Dies ergibt ein Signalmaximum an der ursprünglichen Ortsposition des Fehlers sowie zwei Signale rechts und links davon mit der jeweils halben Signalamplitude. Somit ist eine genauere Positionsbestimmung des Fehlers auch im Differenzbetrieb möglich.

Es sind zahlreiche weitere Varianten möglich. Beispielsweise ist es möglich, für die Bewertung der Fehlertiefe nicht ein gleichgerichtetes Streusignal zu verwenden, sondern einen Spitzen-Spitzen-Wert innerhalb einer Suchstrecke. Dies ergibt eine Verbesserung der Reproduzierbarkeit vor allem bei Fehlern mit Frequenzen in der Nähe der Bandpassgrenzen.

Die hier beschriebenen Möglichkeiten der Auswertung von Sondensignalen mit Hilfe einer Basis-Matrix können auch in Verbindung mit anderen Sondentypen der zerstörungsfreien elektromagnetischen Materialprüfung genutzt werden. Beispielsweise können Signale von Wirbelstromsonden oder Ultraschallsonden in analoger Weise weiterverarbeitet werden. Gemäß einer allgemeineren Formulierung, wobei es sich nicht um einen Teil der vorliegenden Erfindung handelt, wird somit auch Folgendes offenbart:
Verfahren zur elektromagnetischen Prüfung von Prüfgut zum Nachweis von Defekten, bei dem eine Oberfläche des Prüfguts zur Erfassung von durch Defekte verursachten elektromagnetischen Feldern mittels einer Sondenanordnung abgetastet wird, die ein Sonden-Array mit einer Vielzahl von Sonden aufweist, welche in einer ersten Richtung nebeneinander angeordnet sind und bei der Prüfung in einem endlichen Prüfabstand zur Oberfläche des Prüfguts gehalten werden, und
elektrische Sondensignale mittels einer Auswerteeinrichtung zur Qualifizierung der Defekte ausgewertet werden,
dadurch gekennzeichnet, dass eine Auswertung der Sondensignale folgende Schritte umfasst: eine Mapping-Operation, in welcher für jedes Sondensignal eine das Sondensignal repräsentierende Signalinformation mit einer den Entstehungsort eines Sondensignals repräsentierenden Ortsinformation verknüpft wird, um ortsabhängige Signal-Daten zu bilden,
eine Matrixbildungs-Operation, in welcher die ortsabhängigen Signal-Daten (oder daraus abgeleitete Signal-Daten) in ortsrichtig zugeordneten Feldern einer Basis-Matrix gespeichert werden, und
mindestens eine Auswertungs-Operation, in welcher ortsabhängige Signal-Daten aus mindestens zwei in einer Auswertungsrichtung (unmittelbar oder mittelbar) benachbarten Feldern der Basis-Matrix unter Verwendung mindestens eines Auswertungsalgorithmus miteinander verknüpft werden.

## Patentansprüche

1. Verfahren zur Streuflussprüfung von ferromagnetischem Prüfgut, insbesondere von ferromagnetischen Rohren, zum Nachweis von Defekten,
bei dem ein Prüfvolumen des Prüfguts mittels eines magnetischen Feldes magnetisiert wird, eine Oberfläche des Prüfguts zur Erfassung von durch Defekte verursachten magnetischen Streufeldern mittels einer Sondenanordnung unter Relativbewegung zwischen der Sondenanordnung und der Oberfläche des Prüfguts in einer Abtastrichtung abgetastet wird, wobei die Sondenanordnung ein Sonden-Array mit einer Vielzahl von magnetfeldempfindlichen Sonden aufweist, welche in einer ersten Richtung nebeneinander angeordnet sind und bei der Prüfung in einem endlichen Prüfabstand zur Oberfläche des Prüfguts gehalten werden, elektrische Sondensignale zur Qualifizierung der Defekte ausgewertet werden, und
eine Sondenanordnung verwendet wird, in welcher die Sonden in der ersten Richtung jeweils eine Sondenbreite aufweisen, die im Bereich von 0.1 mm bis zu 10 mm liegt,
wobei eine Auswertung der Sondensignale folgende Schritte umfasst: eine Mapping-Operation, in welcher für jedes Sondensignal eine das Sondensignal repräsentierende Signalinformation mit einer den Entstehungsort eines Sondensignals repräsentierenden Ortsinformation verknüpft wird, um ortsabhängige Signal-Daten zu bilden,
eine Matrixbildungs-Operation, in welcher die ortsabhängigen Signal-Daten oder daraus abgeleitete Signal-Daten in ortsrichtig zugeordneten Feldern einer Basis-Matrix mit wenigstens drei Dimensionen gespeichert werden, wobei
eine erste Dimension der Basis-Matrix die Signalinformation repräsentiert,
eine zweite Dimension der Basis-Matrix die Position in der ersten Richtung repräsentiert, und eine dritte Dimension der Basis-Matrix eine Position in Abtastrichtung repräsentiert, und
mindestens eine Auswertungs-Operation, in welcher ortsabhängige Signal-Daten aus mindestens zwei in einer in beliebiger Winkellage quer zur ersten Richtung verlaufenden Auswertungsrichtung benachbarten Feldern der Basis-Matrix unter Verwendung mindestens eines Auswertungsalgorithmus miteinander verknüpft werden.

2. Verfahren nach Anspruch 1, **dadurch gekennzeichnet, dass** bei der Bildung der Basis-Matrix nicht-gleichgerichtete bipolare Signalinformation verwendet wird.

3. Verfahren nach Anspruch 1 oder 2, **gekennzeichnet durch** eine der Mapping-Operation vorgeschaltete Vorfilterung der Sondensignale mittels eines Bandpassfilters mit einstellbaren Grenzfrequenzen, wobei eine untere Grenzfrequenz auf eine kleinste und eine obere Grenzfrequenz auf eine größte zu erwartende Frequenz der Sondensignale eingestellt wird.

4. Verfahren nach einem der vorhergehenden Ansprüche, **gekennzeichnet durch** eine der Mapping-Operation nachgeschaltete, vom Fehlertyp abhängige Filterung mittels eines oder mehrerer Bandpassfilter mit einstellbaren Grenzfrequenzen, wobei eine untere Grenzfrequenz eines Bandpassfilters auf eine kleinste und eine obere Grenzfrequenz des Bandpassfilters auf eine größte zu erwartende Frequenz der Sondensignale für einem vorbestimmten Fehlertyp eingestellt wird.

5. Verfahren nach Anspruch 4, **dadurch gekennzeichnet, dass** eine Anzahl von Bandpässen für die vom Fehlertyp abhängige Filterung konfigurierbar ist und vorzugsweise für die vom Fehlertyp abhängige Filterung zwei, drei, vier oder mehr Bandpassfilter mit unterschiedlichen Grenzfrequenzen verwendet werden.

6. Verfahren nach einem der vorhergehenden Ansprüche, **dadurch gekennzeichnet, dass** eine oder mehrere Auswertungs-Operationen durchgeführt werden, die als Filterungs-Operationen von ortsabhängigen Signaldaten über eine vorgegebene Anzahl von zueinander benachbarten Feldern in einer vorgegebenen Auswertungsrichtung ausgelegt sind.

7. Verfahren nach einem der vorhergehenden Ansprüche, **dadurch gekennzeichnet, dass** eine Auswertungs-Operation eine Glättungsoperation von ortsabhängigen Signalinformations-Daten über eine vorgebbare Anzahl von zueinander benachbarten Feldern in einer Glättungsrichtung umfasst, wobei die Glättungsoperation vorzugsweise eine gleitende Mittelwertbildung oder eine Tiefpassfilterung umfasst.

8. Verfahren nach Anspruch 7, **dadurch gekennzeichnet, dass** die Auswertungsrichtung der Glättungsoperation der ersten Richtung entspricht, wobei vorzugsweise eine Anzahl von bei der Glättungsoperation berücksichtigten Sonden so gewählt wird, dass eine effektive Sondenbreite erzeugt wird, die an eine Mindestfehlerlänge angepasst ist.

9. Verfahren nach einem der vorhergehenden Ansprüche, **dadurch gekennzeichnet, dass** die Auswertungsrichtung einer senkrecht zur ersten Richtung verlaufenden zweiten Richtung entspricht, wobei vorzugsweise in der zweiten Richtung eine Fehlertyp-abhängige BandpassFilterung durchgeführt wird.

10. Verfahren nach einem der vorhergehenden Ansprüche, **dadurch gekennzeichnet, dass** die Auswertungsrichtung einer Schrägrichtung entspricht, die quer zur ersten Richtung und quer zu einer senkrecht zur ersten Richtung verlaufenden zweiten Richtung verläuft.

11. Verfahren nach Anspruch 10, **gekennzeichnet durch** eine Schrägfehler-Kompensationsoperation, in welcher eine Winkeldifferenz zwischen einer Schrägfehler-Richtung und einer Feldlinienrichtung des Magnetisierungsfeldes bestimmt und Signal-Daten eines Schrägfehlers mit einem von der Winkellage abhängigen Kompensierungsfaktor korrigiert werden.

12. Verfahren nach Anspruch 10 oder 11, **gekennzeichnet durch** eine automatische Ermittlung der Winkellage von Schrägfehlern, die in einer quer zur ersten und zur zweiten Richtung verlaufenden Schrägrichtung verlaufen, wobei vorzugsweise automatisch über mehrere Schrägrichtungen in unterschiedliche Auswertungsrichtungen innerhalb eines vorgebbaren Winkelbereichs ausgewertet wird unter Berücksichtigung der Winkelabhängigkeit der Signalamplitude eine Schrägrichtung mit maximaler mittlerer Signalamplitude ermittelt wird.

13. Verfahren nach einem der vorhergehenden Ansprüche, **gekennzeichnet durch** eine Differenzbildungs-Operation, in welcher eine Differenz von ortsabhängigen Signalinformations-Daten von zwei in einer Differenzbildungsrichtung und in einem Differenzabstand zueinander liegenden Feldern ermittelt wird.

14. Verfahren nach Anspruch 13, **dadurch gekennzeichnet, dass** die Differenzbildungsrichtung der ersten Richtung entspricht oder dass die Differenzbildungsrichtung schräg zur ersten Richtung verläuft und/oder dass eine Mehrzahl von Differenzbildungs-Operationen in unterschiedliche Differenzbildungsrichtungen und/oder über unterschiedliche Differenzabstände durchgeführt wird und/oder dass der Differenzabstand auf die Mindestfehlerlänge abgestimmt wird, wobei der Differenzabstand zwischen der Mindestfehlerlänge und dem Fünffachen der Mindestfehlerlänge liegt.

15. Vorrichtung zur Streuflussprüfung von ferromagnetischem Prüfgut, insbesondere von ferromagnetischen Rohren, zum Nachweis von Defekten, mit:
einer Magnetisierungseinrichtung zur Magnetisierung eines Prüfvolumens des Prüfguts;
einer Sondenanordnung zum Abtasten der Oberfläche des Prüfguts unter Relativbewegung zwischen der Sondenanordnung und der Oberfläche des Prüfguts in einer Abtastrichtung zur Erfassung von durch Defekte verursachten magnetischen Streufeldern, wobei die Sondenanordnung ein Sonden-Array (SA) mit einer Vielzahl von magnetfeldempfindlichen Sonden (SO1, SO2) aufweist, welche in einer ersten Richtung (R1) nebeneinander angeordnet sind, und
einer Auswerteeinrichtung (AW) zum Auswerten von Signalen der Sonden zur Qualifizierung der Defekte,
wobei die Sonden des Sonden-Arrays (SA) in der ersten Richtung (R1) jeweils eine Sondenbreite (SB) aufweisen, die im Bereich von 0.1 mm bis zu 10 mm liegt,
wobei die Auswertungseinrichtung (AW) dafür konfiguriert ist, die folgenden Operationen auszuführen:
eine Mapping-Operation, in welcher für jedes Sondensignal eine das Sondensignal repräsentierende Signalinformation mit einer den Entstehungsort eines Sondensignals repräsentierenden Ortsinformation verknüpft wird, um ortsabhängige Signal-Daten zu bilden,
eine Matrixbildungs-Operation, in welcher die ortsabhängigen Signal-Daten oder daraus abgeleitete Signal-Daten in ortsrichtig zugeordneten Feldern einer Basis-Matrix mit wenigstens drei Dimensionen gespeichert werden, wobei
eine erste Dimension der Basis-Matrix die Signalinformation repräsentiert,
eine zweite Dimension der Basis-Matrix die Position in der ersten Richtung repräsentiert, und
eine dritte Dimension der Basis-Matrix eine Position in Abtastrichtung repräsentiert, und
mindestens eine Auswertungs-Operation, in welcher ortsabhängige Signal-Daten aus mindestens zwei in einer in beliebiger Winkellage quer zur ersten Richtung verlaufenden Auswertungsrichtung benachbarten Feldern der Basis-Matrix unter Verwendung mindestens eines Auswertungsalgorithmus miteinander verknüpft werden.

## Claims

1. Method for leakage flux testing of ferromagnetic material to be tested, in particular ferromagnetic pipes, for detecting defects,
in which a test volume of the material to be tested is magnetized by means of a magnetic field,
a surface of the material to be tested is scanned by means of a probe arrangement for capturing magnetic leakage fields caused by defects while there is relative motion in a scanning direction between the probe arrangement and the surface of the material to be tested, wherein the probe arrangement comprises a probe array with a multiplicity of magnetic-field-sensitive probes arranged next to one another in a first direction and held at a finite testing distance from the surface of the material to be tested during the testing,
electrical probe signals are evaluated for qualifying the defects, and
use is made of a probe arrangement in which the probes each have a probe width in the first direction which lies in the range from 0.1 mm to 10 mm,
wherein an evaluation of the probe signals comprises the following steps:
a mapping operation, in which signal information representing the probe signal is linked to spatial information representing the creation location of a probe signal for each probe signal in order to form spatially dependent signal data,
a matrix-forming operation, in which the spatially dependent signal data, or signal data derived therefrom, are stored in fields, assigned with the correct location, of a basis matrix having at least three dimensions,
wherein
a first dimension of the basis matrix represents the signal information,
a second dimension of the basis matrix represents the position in the first direction, and
a third dimension of the basis matrix represents a position in the scanning direction, and
at least one evaluating operation, in which spatially dependent signal data from at least two fields of the basis matrix, adjacent to one another in an evaluating direction which extends at any desired angle in relation to the first direction, are linked to one another using at least one evaluating algorithm.

2. Method according to Claim 1, **characterized in that** non-rectified bipolar signal information is used when forming the basis matrix.

3. Method according to Claim 1 or 2, **characterized by** pre-filtering of the probe signals, carried out before the mapping operation, by means of a band-pass filter with adjustable limit frequencies, wherein a lower limit frequency is set to a lowest frequency of the probe signals to be expected and an upper limit frequency is set to a highest frequency of the probe signals to be expected.

4. Method according to any one of the preceding claims, **characterized by** filtering by means of one or more bandpass filters with adjustable limit frequencies carried out after the mapping operation, said filtering depending on the fault type, wherein a lower limit frequency of a band-pass filter is set to a lowest frequency of the probe signals and an upper limit frequency of the bandpass filter is set to a highest frequency of the probe signals, respectively to be expected for a predetermined fault type.

5. Method according to Claim 4, **characterized in that** a number of band-passes for the filtering depending on the fault type is configurable and, preferably, two, three, four or more band-pass filters with different limit frequencies are used for the filtering depending on the fault type.

6. Method according to any one of the preceding claims, **characterized in that** one or more evaluating operations are carried out, which are designed as filtering operations of spatially dependent signal data over a predetermined number of mutually adjacent fields in a predetermined evaluating direction.

7. Method according to any one of the preceding claims, **characterized in that** an evaluating operation comprises a smoothing operation of spatially dependent signal information data over a predeterminable number of mutually adjacent fields in a smoothing direction, wherein the smoothing operation preferably comprises forming a moving average or low-pass filtering.

8. Method according to Claim 7, **characterized in that** the evaluating direction of the smoothing operation corresponds to the first direction, wherein, preferably, a number of probes taken into account during the smoothing operation is selected in such a way that an effective probe width which is adapted to a minimum fault length is generated.

9. Method according to any one of the preceding claims, **characterized in that** the evaluating direction corresponds to a second direction extending perpendicular to the first direction, wherein, preferably, fault-type-dependent band-pass filtering is carried out in the second direction.

10. Method according to any one of the preceding claims, **characterized in that** the evaluating direction corresponds to an oblique direction which extends at an angle in relation to the first direction and at an angle in relation to a second direction which extends perpendicularly in relation to the first direction.

11. Method according to Claim 10, **characterized by** an oblique fault compensating operation, in which an angle difference between an oblique fault direction and a field line direction of the magnetization field is determined and signal data of an oblique fault are corrected by a compensation factor dependent on the angle position.

12. Method according to Claim 10 or 11, **characterized by** automatically ascertaining the angle position of oblique faults extending in an oblique direction which extends at an angle in relation to the first direction and at an angle in relation to the second direction, wherein the evaluation is carried out over a plurality of oblique directions in different evaluating directions within a predeterminable angle range, preferably automatically, an oblique direction with a maximum mean signal amplitude being ascertained taking into account the angular dependence of the signal amplitude.

13. Method according to any one of the preceding claims, **characterized by** a difference-forming operation, in which a difference between spatially dependent signal information data of two fields lying in a difference-forming direction and at a difference distance from one another is ascertained.

14. Method according to Claim 13, **characterized in that** the difference-forming direction corresponds to the first direction or **in that** the difference-forming direction extends obliquely to the first direction and/or **in that** a plurality of difference-forming operations are carried out in different difference-forming directions and/or over different difference distances and/or **in that** the difference distance is matched to the minimum fault length, wherein the difference distance lies between the minimum fault length and five times the minimum fault length.

15. Apparatus for leakage flux testing of ferromagnetic material to be tested, in particular of ferromagnetic pipes, for detecting defects, comprising:
a magnetization device for magnetizing a test volume of the material to be tested;
a probe arrangement for scanning the surface of the material to be tested, while there is relative motion in a scanning direction between the probe arrangement and the surface of the material to be tested, for capturing magnetic leakage fields caused by defects, wherein the probe arrangement comprises a probe array (SA) with a multiplicity of magnetic-field-sensitive probes (SO1, S02) arranged next to one another in a first direction (R1), and
an evaluating device (AW) for evaluating signals from the probes for qualifying the defects,
wherein the probes of the probe array (SA) each have a probe width (SB) in the first direction (R1) which lies in the range from 0.1 mm to 10 mm,
wherein the evaluating device (AW) is configured to carry out the following operations:
a mapping operation, in which signal information representing the probe signal is linked to spatial information representing the creation location of a probe signal for each probe signal in order to form spatially dependent signal data,
a matrix-forming operation, in which the spatially dependent signal data, or signal data derived therefrom, are stored in fields, assigned with the correct location, of a basis matrix having at least three dimensions, wherein
a first dimension of the basis matrix represents the signal information,
a second dimension of the basis matrix represents the position in the first direction, and
a third dimension of the basis matrix represents a position in the scanning direction, and
at least one evaluating operation, in which spatially dependent signal data from at least two fields of the basis matrix, adjacent to one another in an evaluating direction which extends at any desired angle in relation to the first direction, are linked to one another using at least one evaluating algorithm.

## Revendications

1. Procédé de contrôle par flux de fuite de produit contrôlé ferromagnétique, notamment de tubes ferromagnétiques, en vue d'identifier des défauts,
avec lequel un volume de contrôle du produit contrôlé est magnétisé au moyen d'un champ magnétique,
une surface du produit contrôlé est palpée dans une direction de palpage au moyen d'un arrangement de sondes avec un mouvement relatif entre l'arrangement de sondes et la surface du produit contrôlé en vue de détecter des champs de fuite magnétiques provoqués par des défauts, l'arrangement de sondes possédant un réseau de sondes avec une pluralité de sondes sensibles aux champs magnétiques, lesquelles sont disposées les unes à côté des autres dans une première direction et, lors du contrôle, sont maintenues à un écart de contrôle fini par rapport à la surface du produit contrôlé,
des signaux de sonde électriques sont interprétés en vue de qualifier les défauts, et
un arrangement de sondes est utilisé, dans lequel les sondes présentent respectivement, dans une première direction, une largeur de sonde qui se trouve dans la plage de 0,1 mm à 10 mm,
une interprétation des signaux de sonde comprenant les étapes suivantes :
une opération de mise en correspondance, dans laquelle, pour chaque signal de sonde, une information de signal qui représente le signal de sonde est liée à une information de lieu qui représente le lieu d'apparition d'un signal de sonde afin de former des données de signal dépendantes du lieu,
une opération de formation de matrice, dans laquelle les données de signal dépendantes du lieu ou des données de signal qui en sont dérivées sont mémorisées dans des champs associés en position correcte d'une matrice de base ayant au moins trois dimensions,
une première dimension de la matrice de base représentant l'information de signal,
une deuxième dimension de la matrice de base représentant la position dans la première direction et
une troisième dimension de la matrice de base représentant une position dans la direction de palpage, et
au moins une opération d'interprétation, dans laquelle les données de signal dépendantes du lieu issues d'au moins deux champs de la matrice de base voisins dans une direction d'interprétation, qui suit un tracé selon une position angulaire quelconque transversalement par rapport à la première direction, sont liés entre eux en utilisant au moins un algorithme d'interprétation.

2. Procédé selon la revendication 1, **caractérisé en ce qu'**une information de signal bipolaire non redressée est utilisée lors de la formation de la matrice de base.

3. Procédé selon la revendication 1 ou 2, **caractérisé par** un préfiltrage des signaux de sonde en amont de l'opération de mise en correspondance au moyen d'un filtre passe-bande aux fréquences de coupure réglables, une fréquence de coupure inférieure étant réglée à une fréquence attendue la plus petite des signaux de sonde et une fréquence de coupure supérieure à une fréquence la plus grande.

4. Procédé selon l'une des revendications précédentes, **caractérisé par** un filtrage dépendant du type de défaut en aval de l'opération de mise en correspondance au moyen d'un ou de plusieurs filtres passe-bande aux fréquences de coupure réglables, une fréquence de coupure inférieure d'un filtre passe-bande étant réglée à une fréquence attendue la plus petite des signaux de sonde pour un type de défaut prédéterminé et une fréquence de coupure supérieure du filtre passe-bande à une fréquence la plus grande.

5. Procédé selon la revendication 4, **caractérisé en ce qu'**un nombre de passe-bandes peut être configuré pour le filtrage dépendant du type de défaut et de préférence deux, trois, quatre filtres passe-bande ou plus ayant des fréquences de coupure différentes sont utilisés pour le filtrage dépendant du type de défaut.

6. Procédé selon l'une des revendications précédentes, **caractérisé en ce qu'**une ou plusieurs opérations d'interprétation sont effectuées, lesquelles sont conçues comme des opérations de filtrage de données de signal dépendantes du lieu sur un nombre pouvant être prédéfini de champs mutuellement voisins dans une direction d'interprétation prédéfinie.

7. Procédé selon l'une des revendications précédentes, **caractérisé en ce qu'**une opération d'interprétation comprend une opération de lissage de données d'informations de signal dépendantes du lieu sur un nombre pouvant être prédéfini de champs mutuellement voisins dans une direction de lissage, l'opération de lissage comprenant de préférence un calcul de la valeur moyenne glissante ou un filtrage passe-bas.

8. Procédé selon la revendication 7, **caractérisé en ce que** la direction d'interprétation correspond à l'opération de lissage de la première direction, un nombre de sondes prises en compte lors de l'opération de lissage étant choisi de telle sorte qu'une largeur de sonde efficace est générée, laquelle est adaptée à une longueur de défaut minimale.

9. Procédé selon l'une des revendications précédentes, **caractérisé en ce que** la direction d'interprétation correspond à une deuxième direction qui suit un tracé perpendiculaire à la première direction, un filtrage passe-bande dépendant du type d'erreur étant de préférence effectué dans la deuxième direction.

10. Procédé selon l'une des revendications précédentes, **caractérisé en ce que** la direction d'interprétation correspond à une direction oblique, laquelle suit un tracé transversal par rapport à la première direction et transversal par rapport à une deuxième direction suivant un tracé perpendiculaire à la première direction.

11. Procédé selon la revendication 10, **caractérisé par** une opération de compensation de défaut d'obliquité, dans laquelle une différence d'angle entre une direction de défaut d'obliquité et une direction de ligne de champ du champ de magnétisation est déterminée et les données de signal d'un défaut d'obliquité sont corrigées avec un facteur de compensation dépendant de la position angulaire.

12. Procédé selon la revendication 10 ou 11, **caractérisé par** une détermination automatique de la position angulaire des défauts d'obliquité, lesquels suivent un tracé dans une direction oblique qui suit un tracé transversal par rapport à la première et à la deuxième direction, une direction oblique avec une amplitude de signal moyenne maximale étant déterminée en interprétant de préférence automatiquement sur plusieurs directions obliques dans des directions d'interprétation différentes au sein d'une plage angulaire pouvant être prédéfinie en tenant compte de la dépendance à l'angle de l'amplitude du signal.

13. Procédé selon l'une des revendications précédentes, **caractérisé par** une opération de calcul de différence, dans laquelle une différence de données d'informations de signal de deux champs se trouvant dans une direction de calcul de différence et à un écart de différence l'un par rapport à l'autre.

14. Procédé selon la revendication 13, **caractérisé en ce que** la direction de calcul de différence correspond à la première direction ou **en ce que** la direction de calcul de différence suit un tracé oblique par rapport à la première direction et/ou **en ce qu'**une pluralité d'opérations de calcul de différence sont effectuées dans des directions de calcul de différence différentes et/ou sur des écarts de différence différents et/ou **en ce que** l'écart de différence est accordé sur la longueur de défaut minimale, l'écart de différence étant compris entre la longueur de défaut minimale et le quintuple de la longueur de défaut minimale.

15. Système de contrôle par flux de fuite de produit contrôlé ferromagnétique, notamment de tubes ferromagnétiques, en vue d'identifier des défauts, comprenant :
un dispositif de magnétisation destiné à magnétiser un volume de contrôle du produit contrôlé ;
un arrangement de sondes destiné à palper la surface du produit contrôlé dans une direction de palpage par un mouvement relatif entre l'arrangement de sondes et la surface du produit contrôlé en vue de détecter des champs de fuite magnétiques provoqués par des défauts, l'arrangement de sondes possédant un réseau de sondes (SA) avec une pluralité de sondes (SO1, SO2) sensibles aux champs magnétiques, lesquelles sont disposées les unes à côté des autres dans une première direction (R1) et,
un dispositif d'interprétation (AW) destiné à interpréter des signaux des sondes en vue de qualifier les défauts, les sondes du réseau de sondes (SA) présentant respectivement, dans la première direction (R1), une largeur de sonde (SB) qui se trouve dans la plage de 0,1 mm à 10 mm,
le dispositif d'interprétation (AW) étant configuré pour exécuter les opérations suivantes :
une opération de mise en correspondance, dans laquelle, pour chaque signal de sonde, une information de signal qui représente le signal de sonde est liée à une information de lieu qui représente le lieu d'apparition d'un signal de sonde afin de former des données de signal dépendantes du lieu,
une opération de formation de matrice, dans laquelle les données de signal dépendantes du lieu ou des données de signal qui en sont dérivées sont mémorisées dans des champs associés en position correcte d'une matrice de base ayant au moins trois dimensions,
une première dimension de la matrice de base représentant l'information de signal,
une deuxième dimension de la matrice de base représentant la position dans la première direction et
une troisième dimension de la matrice de base représentant une position dans la direction de palpage, et
au moins une opération d'interprétation, dans laquelle les données de signal dépendantes du lieu issues d'au moins deux champs de la matrice de base voisins dans une direction d'interprétation, qui suit un tracé selon une position angulaire quelconque transversalement par rapport à la première direction, sont liés entre eux en utilisant au moins un algorithme d'interprétation.
